# EUROPEAN PATENT APPLICATION

(11) **EP 2 587 809 A1**
(43) Date of publication of application: **01.05.2013**
(21) Application number: 11797844.5
(22) Date of filing: 22.06.2011
(51) Int. Cl.: H04N 13/00, H04N 7/173

(54) **CONTENT DISTRIBUTION SYSTEM, PLAYBACK DEVICE, DISTRIBUTION SERVER, PLAYBACK METHOD, AND DISTRIBUTION METHOD**

(30) Priority: 27.09.2010 JP 2010215898; 23.06.2010 JP 2010142719
(71) Applicant: Panasonic Corporation, Kadoma-shi Osaka 571-8501 (JP)
(72) Inventor: KAWAGUCHI, Toru, Chuo-ku Osaka 540-6207 (JP); SHINOHARA, Hiroki, Chuo-ku Osaka 540-6207 (JP)
(74) Representative: Grünecker, Kinkeldey, Stockmair & Schwanhäusser
(86) International application number: PCT/JP2011/003551
(87) International publication number: WO 2011/161956

(57) **Abstract**

A content distribution system capable of playing back a stream without missing out an initial frame. The content distribution system includes a distribution server and a playback apparatus. The distribution server transmits a video stream and an initial frame state flag indicating whether an initial frame of the video stream is a 3D video frame or a 2D video frame. Receiving the video stream and the initial frame state flag, the playback apparatus determines whether the initial frame is a 3D video frame or a 2D video frame by using the initial frame state flag and sets, prior to decoding the video stream, an output mode to be applied to the initial frame to a 3D output mode when the initial frame is a 3D video frame and to a 2D output mode when the initial frame is a 2D video frame.

## Description

### [Technical Field]

The present invention relates to a technology for displaying 2D and 3D video.

### [Description of the Related Art]

The technology disclosed in Patent Literature 1 and the like is conventionally known as technology for reproducing and displaying stereoscopic images on digital televisions and the like.

More specifically, Patent Literature 1 discloses a technology of providing, to each frame constituting a stream to be sequentially broadcasted, identification information identifying whether a given frame is a 2D video frame or a 3D video frame. A playback apparatus playing back video determines whether a given frame is a 2D video frame or a 3D video frame by referring to the identification information provided thereto and performs playback of 2D video or 3D video according to the result of the determination.

### [Citation List]

### [Patent Literature]

### [Patent Literature 1]

Japanese Patent Application Publication No. 2005-094168

### [Summary of Invention]

### [Technical Problem]

Here, presumption is made of a case where playback is performed of a stream distributed over a network such as the Internet. Commonly, when switching between playback of 2D video and 3D video, processing is required of changing an output mode to an output mode suitable for a corresponding type of video. This is since 2D and 3D video are displayed utilizing different output cycles. As such, when performing playback of a distributed stream while applying the technology disclosed in Patent Literature 1, the output mode employed for playing back each of the frames constituting the stream is specified according to the identification information provided to a given frame. Thus, when it is required to switch between output modes immediately before or after the commencement of playback, a problematic situation arises where a frame to be initially played back (referred to hereinafter as an "initial frame") is not output due to the processing of changing the output mode.

In view of such problems, one aim of the present invention is to provide a content distribution system, a playback apparatus, a distribution server, a playback method, and a distribution method, which achieve playback of a stream without missing out the initial frame of the stream.

### [Solution to the Problems]

So as to achieve the aim presented in the above, the present invention provides a content distribution system including a distribution server that distributes a video stream pertaining to video content and a playback apparatus that decodes and plays back the video stream, the distribution server and the playback apparatus being connected via a network, the distribution server comprising: a distribution unit that distributes, to the playback apparatus via the network, a video stream containing video content corresponding to an entirety of a single program and an initial frame state flag associated with the video stream, the initial frame state flag indicating whether an initial frame of the video stream is a 3D video frame or a 2D video frame, the initial frame corresponding to a head portion of the video content, and the playback apparatus comprising: a reception unit that receives, from the distribution server, the video stream and the initial frame state flag; a determination unit that determines, prior to decoding of the video stream, whether the initial frame of the video stream is a 3D video frame or a 2D video frame by using the initial frame state flag; and a playback unit that sets, prior to decoding the video stream, an output mode to be applied to the initial frame to either a 3D output mode or a 2D output mode, and decodes and plays back the video stream, the output mode being set to the 3D output mode when the determination unit determines that the initial frame is a 3D video frame and the output mode being set to the 2D output mode when the determination unit determines that the initial frame is a 2D video frame.

### [Advantageous Effects of the Invention]

According to this structure, the distribution server of the content distribution system transmits the initial frame state flag to the playback apparatus. The playback apparatus determines whether an initial frame of content corresponding to a single program is a 2D video frame or a 3D video frame by using the initial frame state flag. When determining that the initial frame is a 3D video frame, the playback apparatus sets the output mode to be applied to the initial frame to the 3D output mode prior to decoding the video stream. On the other hand, when determining that the initial frame is a 2D video frame, the playback apparatus sets the output mode to the 2D output mode prior to decoding the stream. The playback apparatus performs decoding and playback of the stream after setting an appropriate output mode, and therefore, playback of the stream is executed without missing out the initial frame of the stream.

### [Brief Description of the Drawings]

Figs. 1A-1C illustrate a form of usage of a digital television (playback apparatus) 100.
Fig. 2 illustrates an example of how a stereoscopic image is displayed.
Fig. 3 illustrates an example of how video in the Side-by-Side format is displayed.
Fig. 4 illustrates an example of a structure of frames for stereoscopic viewing.
Fig. 5 illustrates a structure of a content distribution system 1.
Fig. 6 illustrates a structure of a distribution server 300.
Fig. 7 illustrates one example of a data structure of a content management table 310.
Fig. 8 illustrates one example of a data structure of a playback control file.
Fig. 9 illustrates a structure of the digital television 100.
Fig. 10 illustrates a structure of an output processing unit 118.
Fig. 11 illustrates an overview of operations of the content distribution system 1.
Fig. 12 is a flowchart illustrating operations of the digital television 100 when performing playback of a stream.
Fig. 13 is a flowchart illustrating playback processing in a 2D output mode.
Fig. 14 is a flowchart illustrating playback processing in a 3D output mode.
Fig. 15 is a flowchart illustrating operations involved in playback processing of video including both 2D and 3D video.
Fig. 16 illustrates operations involved when performing playback processing while referring to identification information contained in SEIs.
Fig. 17 illustrates operations involved when performing playback processing without referring to identification information contained in the SEIs.
Fig. 18 illustrates a modification of the data structure of the playback control file.
Fig. 19 illustrates a modification of the data structure of the playback control file (specification of an initial frame of content piece).
Fig. 20 illustrates a modification of the data structure of the playback control file (specification of an initial frame of each chapter).
Fig. 21 is a block diagram illustrating a structure of a distribution server 400.
Fig. 22 illustrates one example of a data structure of a content management table 500.
Fig. 23 illustrates one example of a playback UI.

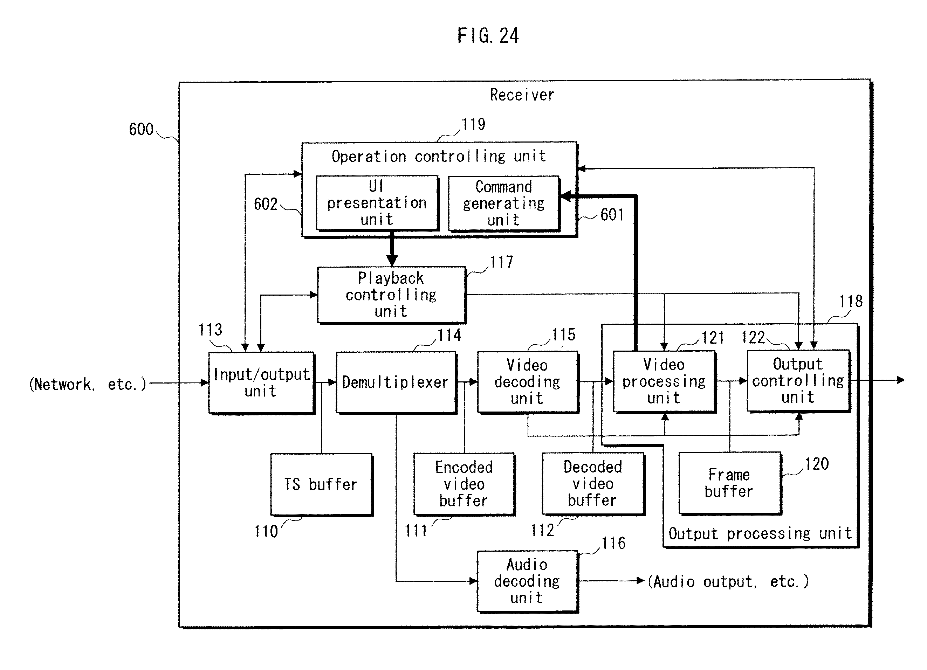

Fig. 24 illustrates a structure of a receiver 600.
Fig. 25 illustrates one example of a command for notifying a server of a state at a point where playback has been suspended.
Fig. 26 illustrates content playback suspension processing.
Fig. 27 illustrates content playback resume preparation processing.
Fig. 28 illustrates operations involved in processing of executing playback of video from a point at which playback has been previously suspended.
Fig. 29 is a flowchart illustrating determination processing of an initial frame.
Figs. 30A and 30B illustrate modifications of the playback UI and the command for notifying a distribution server of a suspension point state.

### [Description of Embodiments]

### 1. First Embodiment

In the following, explanation is provided of a content distribution system pertaining to the present embodiment with reference to the accompanying drawings. The content distribution system pertaining to the present embodiment is constituted of a distribution server that performs distribution of content and a playback apparatus that performs playback of the distributed content.

### 1.1 Stereoscopic Viewing

First, a brief explanation is provided of the principles of stereoscopic viewing. Stereoscopic viewing is realized by using an integral imaging method such as a holographic technology or a method using parallax images.

The first method of applying holographic technology is characterized in that objects are recreated stereoscopically and are perceived by humans in exactly the same way as when viewing objects in everyday life. However, although the generation of moving pictures according to this technology is possible in theoretical grounds, there are several requirements which need to be satisfied to actually realize holographic display. That is, a computer which is capable of performing an enormous amount of calculation for realtime generation of moving images is required and a display device having a graphic resolution sufficient for displaying thousands of lines drawn within a single-millimeter space are required. Since such requirements are extremely difficult to satisfy at present, there are few, if any, examples of commercial realization of the holographic technology.

Subsequently, explanation is provided of the second method of applying parallax viewing. Generally, due to the positional difference between the right eye and the left eye, there is a slight difference between an image viewed by the right eye and an image viewed by the left eye. It is by utilizing this difference, also called parallax, that humans are able to perceive images appearing in the eyes as stereoscopic images. By performing stereoscopic displaying of parallax images, planar images are perceived by the human eyes as if the images were stereoscopic, by parallax.

This method is advantageous in that stereoscopic viewing can be realized simply by preparing two images of different perspectives, one for the right eye and one for the left eye. Here, the importance lies in ensuring that an image corresponding to the left or right eye is made visible to only the corresponding eye. As such, several technologies applying this method, including the alternate-frame sequencing method, have been put into practical use.

The alternate-frame sequencing method is a method where left-view images and right-view images are displayed in alternation along the chronological axis direction. The images displayed in alternation in such a manner cause the left and right scenes to overlap each other in the viewer's brain due to an afterimage effect, and thus are perceived as stereoscopic images.

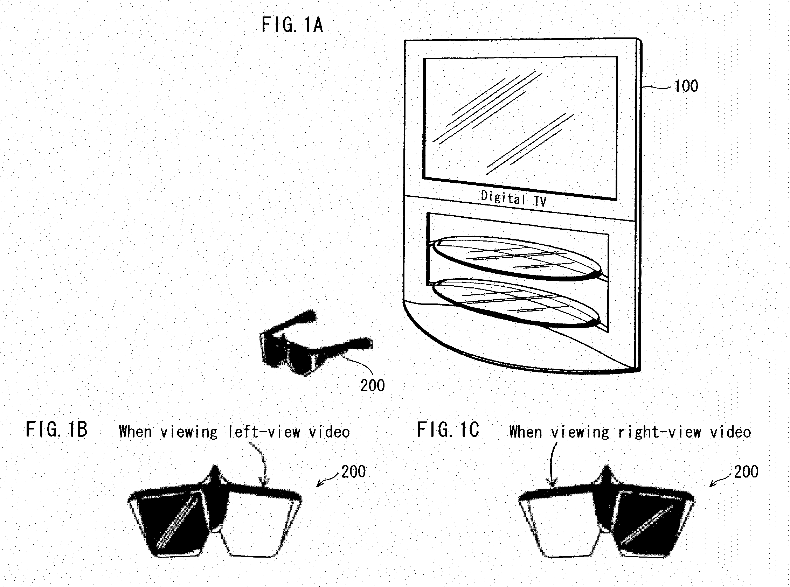

A playback apparatus pertaining to the present embodiment is a television capable of displaying 3D video. Fig. 1A illustrates a form of usage of the playback apparatus. As illustrated in Fig. 1A, the playback apparatus includes a digital television 100 and 3D glasses 200, which are used by a user in combination.

The digital television 100 is capable of displaying 2D video and 3D video, and displays video by playing back streams that are included in broadcast waves received thereby.

The digital television 100 of the present embodiment realizes stereoscopic viewing by having the user wear the 3D glasses 200. The 3D glasses 200 include liquid crystal shutters, and enable the user to view parallax images through alternate-frame sequencing. A parallax image is a pair of images composed of an image for the right eye and an image for the left eye and enables stereoscopic viewing by having each eye of the user view only the image corresponding thereto. Fig. 1B shows the state of the 3D glasses 200 when a left-view image is being displayed. At the moment when a left-view image is displayed on the screen, the aforementioned 3D glasses 200 make the liquid crystal shutter corresponding to the left eye transparent and make the liquid crystal shutter corresponding to the right eye opaque. Fig. 1C shows the state of the 3D glasses 200 when a right-view image is being displayed. At a moment when a right-view image is displayed on the screen, in a reversal of the above, the liquid crystal shutter corresponding to the right eye is made transparent and the liquid crystal shutter corresponding to the left eye is made opaque.

This concludes the explanation of the form of usage of the playback apparatus.

In the following, explanation is provided of a method of displaying parallax images for stereoscopic viewing.

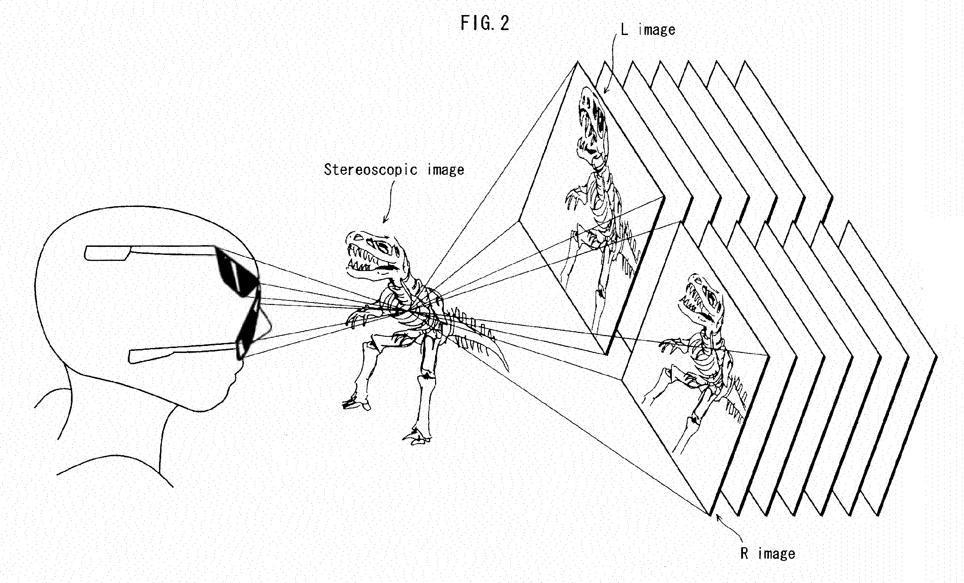

Stereoscopic viewing applying the parallax image method involves preparing respective pictures for the right eye and the left eye and displaying such pictures so that each eye sees only pictures corresponding thereto in order to achieve the stereoscopic effect. Fig. 2 shows the head of a user on the left-hand side, and, on the right-hand side, an example of a dinosaur skeleton as viewed by the left eye as well as by the right eye. By repeatedly alternating the transparency and opacity for the left and right eyes, the user's brain is made to combine the views of each eye from afterimage effects, resulting in the perception that a stereoscopic object exists along an imaginary line extending from the middle of the face.

In the context of parallax images, images viewed by the left eye are called left-view images (L-images) and images viewed by the right eye are called right-view images (R-images). Furthermore, a motion picture in which each picture is an L-image is called the left-view video and a motion picture in which each picture is an R-image is called the right-view video.

There exist 3D methods in which the left-view video and the right-view video are combined and compression-coded, such as the frame compatible method and the service compatible method.

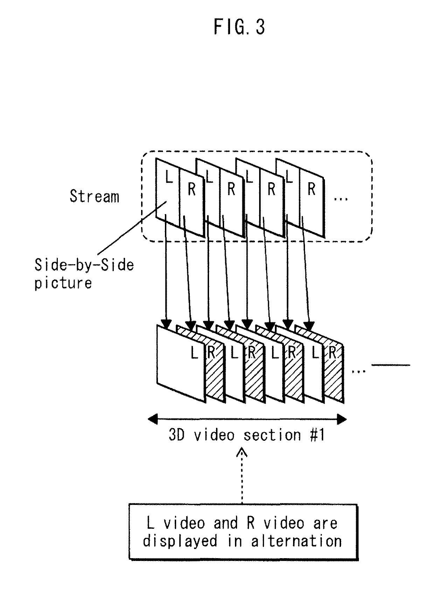

The first of these, the frame-compatible method, involves shrinking or extracting lines from each of the pictures corresponding to the left-view video and the right-view video so as to combine the pictures into one, and is performed using ordinary motion picture compression-coding methods. An example of this is the Side-by-Side format as illustrated in Fig. 3. The Side-by-Side format shrinks each of the pictures corresponding to the left-view video and the right-view video by 1/2 in the horizontal direction and lines up the results side by side to form a single picture. A stream is yielded from the motion picture made up of pictures so formed by performing ordinary motion picture compression-coding. On the other hand, during playback, the stream is decoded into a motion picture according to ordinary motion picture compression-coding methods. Further, each picture within the decoded motion picture is split into left and right images which are respectively expanded in the horizontal direction by a factor of two to obtain the pictures corresponding to the left-view video and the right-view video. The images so obtained of the left-view video (L-images) and the right-view video (R-images) are displayed in alternation. Thus, as illustrated in Fig. 2, a stereoscopic image can be obtained therefrom. Aside from the Side-by-Side format, the frame-compatible method can be achieved using the Top-and-Bottom format, in which the L and R images are aligned vertically, or the Line Alternative format, in which the lines within each picture are interleaved lines from the L and R images, and the like.

Subsequently, explanation is provided of the service compatible method. The service compatible method is realized by using a left-view stream and a right-view stream respectively yielded by digitalizing and compression-coding left-view video and right-view video.

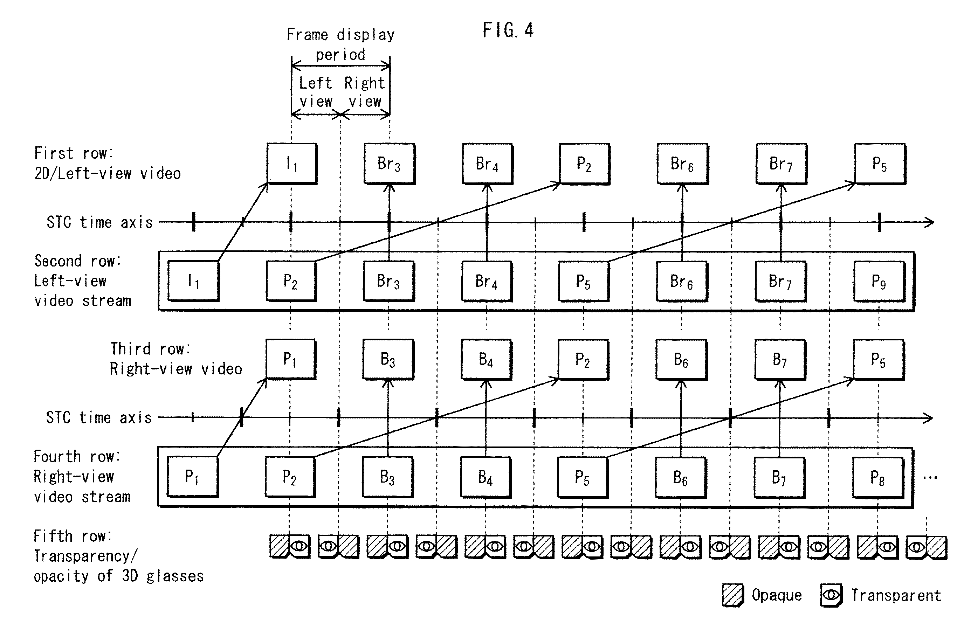

Fig. 4 illustrates an example of the internal structure of the left-view and right-view streams used in the service compatible method for realizing stereoscopic viewing.

The second row of Fig. 4 shows the internal structure of the left-view stream. In specific, the left-view stream includes the picture data I₁, P₂, Br₃, Br₄, P₅, Br₆, Br₇, and P₉. These pictures are decoded in accordance with the Decode Time Stamp (DTS). The top row shows the left-view images. The left-view images are played back by playing back the decoded picture data I₁, P₂, Br₃, Br₄, P₅, Br₆, Br₇, and P₉ in the order of I₁, Br₃, Br₄, P₂, Br₆, Br₇, and P₅ in accordance with the Presentation Time Stamp (PTS). In Fig. 4, a picture to which intra-picture coding is applied without the use of a reference picture is called an I-picture. Here, note that a picture is defined as a unit of encoding that encompasses both frames and fields. Also, a picture to which inter-picture coding is applied with reference to one previously-processed picture is called a P-picture, a picture to which inter-picture predictive coding is applied with reference to two previously-processed pictures at once is called a B-picture, and a B-picture referenced by other pictures is called a Br-picture.

The fourth row of the Fig. 4 shows the internal structure of the right-view stream. This right-view stream includes picture data P₁, P₂, B₃, B₄, P₅, B₆, B₇, and P₈. These picture data are decoded in accordance with the DTS. The third row shows the right-view images. The right-view images are played back by playing back the decoded picture data P₁, P₂, B₃, B₄, P₅, B₆, B₇, and P₈ in the order of P₁, B₃, B₄, P₂, B₆, B₇, and P₅ in accordance with the PTS. Here, it should be noted that stereoscopic playback by alternate-frame sequencing displays one of the pair sharing the same PTS, i.e. either the left-view image or the right-view image, with a delay equal to half the PTS interval (hereinafter referred to as a "3D display delay") following the display of the image of the other perspective.

The fifth row shows how the 3D glasses 200 change between different states thereof. As shown in the fifth row, the right-eye shutter is closed whenever left-view images are viewed, and the left-eye shutter is closed whenever right-view images are viewed.

In addition to inter-picture predictive coding that makes use of correlations between pictures along the chronological axis, the left-view stream and the right-view stream are also compressed using inter-picture predictive coding that makes use of correlations between the different perspectives. The pictures of the right-view stream are compressed by referencing pictures from the left-view stream with the same display time.

For example, the leading P-picture of the right-view stream references an I-picture from the left-view stream, the B-pictures of the right-view stream reference Br-pictures from the left-view stream, and the second P-picture of the right-view stream references a P-picture from the left-view stream.

Further, a compression coded stream that can be decoded independently is termed a "base view stream". This may be either one of the left-view and right-view videos. All of the picture data from the left-view and right view streams making up the base view stream are compression coded according to inter-frame correlations. A stream that can only be decoded after the base view stream has been decoded is termed a "dependent view stream". Here, the base view stream and the dependent view stream may be stored and transferred as separate streams, or else may be multiplexed into a single stream, such as an MPEG2-TS stream or the like.

### 1.2 Overview of the Content Distribution System 1

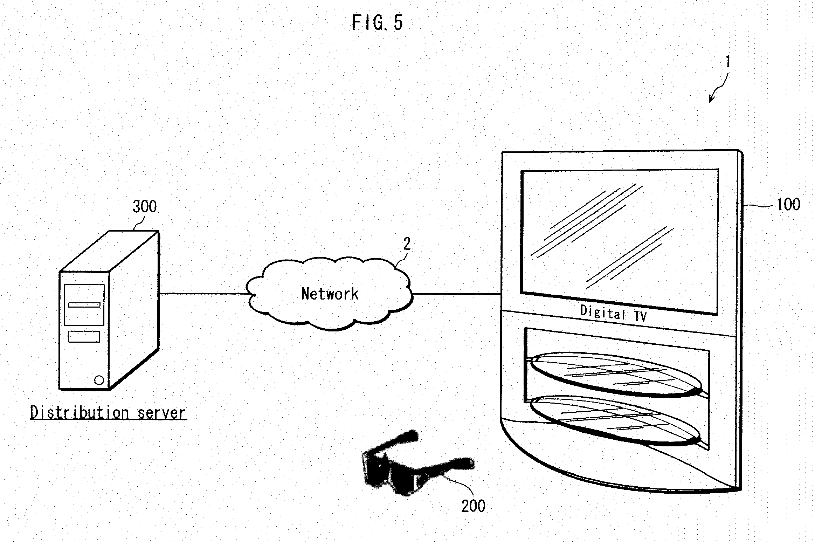

A content distribution system 1 includes the digital television 100 and a distribution server 300 as illustrated in Fig. 5.

In the content distribution system 1, the digital television 100 and the distribution server 300 are connected to each other via a network 2 such as the internet, and perform transmission and reception of data such as program content with each other via the network 2. Note that program content is referred to hereinafter simply as "content".

In addition, the digital television 100 is, for instance, a plasma television, and a user is required to use the 3D glasses 200 when viewing content including 3D video on the digital television 100.

The distribution server 300 stores multiple pieces of content, each in a form of a stream specified under MPEG-4 AVC/H.264 (referred to hereinafter simply as a "stream"). When receiving a request for content from the digital television 100, the distribution server 300 transmits a playback control file corresponding to the content requested to the digital television 100. A playback control file is a file including description of information such as attribute information, a storage location (URL) and the like of the corresponding content. The information included in a playback control file is required for playback of the corresponding content. In addition to such information, a playback control file includes information identifying whether the corresponding content is (i) content constituted of only 2D video, (ii) content constituted of only 3D video, or (iii) content including both 2D and 3D video.

After having transmitted the playback control file, the distribution server 300 distributes, in response to a request by the digital television 100, a stream corresponding to the content requested to the digital television 100 via the network 2.

The digital television 100 transmits a request for content to the distribution server 300 via the network 2. Following this, when receiving the stream corresponding to the content from the distribution server 300, the digital television 100 plays back the received stream. Note that the content requested by the digital television 100 is content that is desired by a viewer and that has been selected by the viewer performing user operations.

Although the stream as discussed herein is a conventional stream specified under MPEG-4 AVC/H.264, a brief explanation thereof is provided in the following.

A stream is composed of a series of GOPs (Groups of Pictures). A GOP includes a plurality of frames (pictures) arranged in order in accordance with the reference relationship between the frames. When decoding the stream, the encoded frames are rearranged in the order in which they are to be displayed and decoding is performed in such an order.

In addition, each frame is provided with additional information referred to as a "Frame packing arrangement SEI (Supplemental Enhance Information)". The SEI includes identification information identifying whether a corresponding frame is a 3D video frame or a 2D video frame. Here, it should be noted that SEIs need not be provided to all frames, and when a frame is not provided with the SEI, an interpretation is made that the frame is a 2D video frame. Additionally, when a playback control file corresponding to content includes indication that the content is constituted of only 2D video or that the content is constituted of only 3D video, the SE1 need not be provided to any of the frames constituting the content.

When receiving a stream including both 2D and 3D video frames after making a determination that content includes both 2D video and 3D video according to the information included in a playback control file, the digital television 100, in decoding a frame of the stream, makes a determination of whether the frame is a 3D video frame or a 2D video frame according to the identification information included in the corresponding SEI. The digital television 100 performs decoding and playback of a stream according to the result of the determination.

In contrast, when determining that the stream requested by a user is either a stream constituted of only 2D video or a stream constituted of only 3D video according to description included in the playback control file, the digital television 100 performs decoding and playback of the stream without referring to the identification information included in the SEIs.

In the following, detailed explanation is provided of each of the devices (the digital television 100 and the distribution server 300).

### 1.3 Structure of the Distribution Server 300

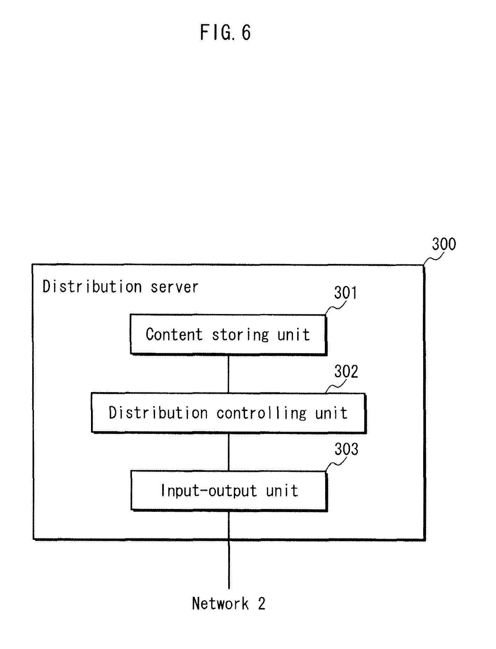

The distribution server 300 includes: a content storing unit 301; a distribution controlling unit 302; and an input/output unit 303 as illustrated in Fig. 6.

### (1) The Content Storing Unit 301

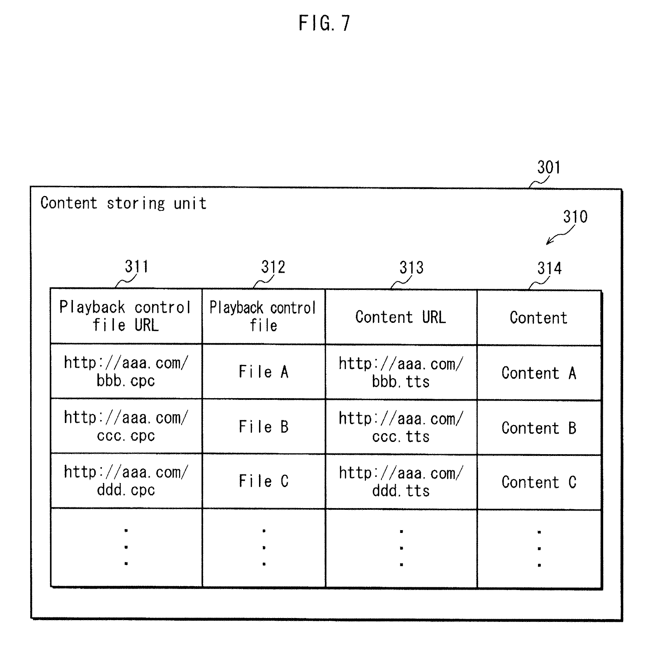

The content storing unit 301 stores a content management table 310 as illustrated in Fig. 7.

The content management table 310 is provided with multiple areas, each of which storing a set of items. The items constituting a set include: a *playback control file URL 311, a playback control file 312, a content URL 313,* and *content 314.*

The item *content 314* indicates content which can be specified by external units at a location indicated by a corresponding *content URL 313.* In addition, it is presumed herein that the content indicated under the item *content 314* is stored in the form of a stream.

The item *playback control file 312* indicates a playback control file that corresponds to content indicated under the item *content 314* in the same set. A playback control file indicated under the item *playback control file 312* can be specified by external units at a location indicated by a corresponding *playback control file URL 311.*

For instance, a content URL of content A is "*http:*//*aaa.com*/*bbb.tts*", and a playback control file corresponding to the content A is indicated by "*File A*", which has a playback control file URL of "*http:*//*aaa.com*/*bb.cpc*".

In the following, explanation is provided of the playback control file.

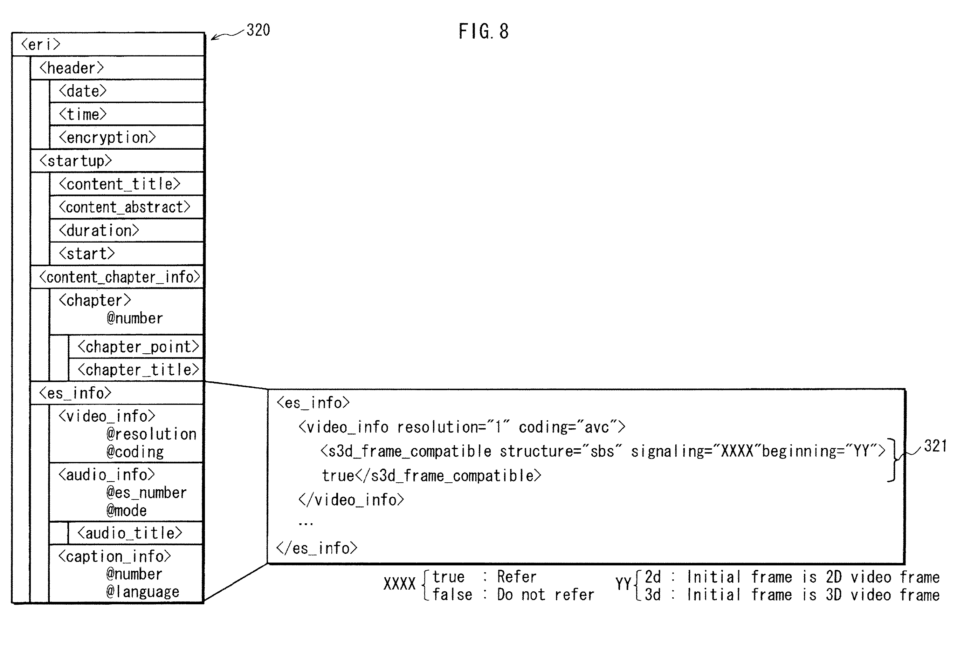

A playback control file 320 has a data structure as illustrated in Fig. 8.

A header portion (<*header*>) of the playback control file 320 stores information such as: <*date*> and <*time*> indicating the date and time that the playback control file 320 was created; and <*encryption*> indicating whether or not content corresponding to the playback control file 320 is encrypted.

A resource information portion (<*startup*>) of the playback control file 320 stores information such as: <*content*_*title*> indicating a title of the content; <*content*_*abstract*> providing a general description on the content; <*duration*> indicating a duration of the content; and (<*start*>) indicating a reference destination of the content. In specific, the reference destination indicated in <*start*> corresponds to a content URL of the content.

A chapter information portion (<*content*_*chapter*_*info*>) of the playback control file 320 stores information such as: <*chapter number*> indicating a chapter number; <*chapter*_*point*> indicating a starting point of a chapter corresponding to the chapter number; and <*chapter_title*> indicating a title of the corresponding chapter. Here, it is to be noted that there may be multiple sets of chapter information constituted of a chapter number, a chapter starting point, and a chapter title.

An ES (Elementary Stream) information portion (<*es_info*>) of the playback control file 320 stores information such as: <*video_info*> including information pertaining to a video ES; <*audio_info*> including information pertaining to an audio ES; and <*caption_info*> including information pertaining to a subtitle ES.

In the present embodiment, a new description element 321 is additionally provided to the information pertaining to a video ES included in the ES information portion.

In specific, description of "*s3d_frame_compatible structure=* "*sbs* "" included in the description element 321 indicates that a stream corresponding to the playback control file includes a frame generated in the Side-by-Side format. In other words, the description of *"s3d_frame_compatible structure="sbs* "" indicates that the stream includes 3D video. Here, when the stream includes a frame generated in the Top-and-Bottom format, the description of *"sbs "* in *"s3d_frame_compatible structure="sbs""* is replaced with description of *"tab".* Note that, in the following description, the description *"structure="sbs""* included in the description element 321 is referred to as a "3D composition state flag". Further, in the explanation to be provided in the following, when "the 3D composition state flag indicates Side-by-Side", *"sbs"* is set to the 3D composition state flag, whereas when "the 3D composition state flag indicates Top-and-Bottom", *"tab"* is set to the 3D composition state flag.

Description of *"signaling="xxxx""* included in the description element 321 indicates whether or not identification information included in a corresponding SEI is to be referred to for decoding each frame of the stream. More specifically, either *"true"* or *"false"* is set to *"xxxx"* of "*signaling*="*xxxx*"*"* as illustrated in Fig. 8. When *"true"* is set to "xxxx", indication is being made that identification information included in a corresponding SEI is to be referred to for decoding each frame, whereas, when *"false"* is set to "xxxx", indication is being made that identification information included in the SEIs is not to be referred to. In other words, when *"false"* is set to "xxxx", indication is being made that all frames contained in the stream are 3D video frames. Note that, in the explanation provided in the following, the description *"signaling="xxxx""* included in the description element 321 is referred to as a "program state flag". Further, in the explanation to be provided in the following, when "the program state flag indicates that identification information in SEI is to be referred to", the program state flag indicates "*signaling*="*true*"", whereas when "the program state flag indicates that identification information in SEI is not to be referred to", the program state flag indicates "*signaling*="*false*"",

Description of "*beginning*="*yy*"" included in the description element 321 indicates whether an initial frame of the stream is a 2D video frame or a 3D video frame. Here, a description of either *"2d"* or "*3d*" is set to "yy" of "*beginning=* "*yy*"" as illustrated in Fig. 8. When *"2d"* is set to "*yy*", indication is being made that the initial frame is a 2D video frame, whereas, when *"3d"* is set to "*yy*", indication is being made that the initial frame is a 3D video frame. Note that, in the following description, the description *"beginning="yy""* included in the description element 321 is referred to as an "initial frame state flag". Further, in the explanation to be provided in the following, when "the initial frame state flag indicates 3D", the initial frame state flag indicates *"beginning= "3d "",* whereas, when "the initial frame state flag indicates 2D", the initial frame state flag indicates *"beginning= "2d "".* In addition, an initial frame as defined in the present embodiment refers to a frame, in a stream pertaining to a program, corresponding to a head portion of the program.

In addition, the description of *"true"* in *"true<*/*s3d_frame_compatible"* included in the description element 321 indicates that the stream includes a 3D video frame.

In addition, the non-existence of the description element 321 in the ES information portion and/or the description of "*false*" being included instead of *"true"* in "*true<*/*s3d_frame_compatible*" indicates that all frames constituting the stream are 2D video frames.

### (2) The Distribution Control Unit 302

The distribution controlling unit 302 transmits a playback control file and distributes a stream to the digital television 100 in response to requests made by the digital television 100.

More specifically, when receiving file request information including a playback control file URL of a playback control file corresponding to distribution-target content (a distribution-target stream) from the digital television 100, the distribution controlling unit 302 obtains the playback control file identified by the playback control file URL included in the file request information received from the content management table 310.

Subsequently, the distribution controlling unit 302 transmits the playback control file so obtained to the digital television 100 via the input/output unit 303.

Further, when receiving information from the digital television 100 requesting for the distribution-target stream and stream request information including a content URL specifying the distribution-target stream, the distribution controlling unit 302 obtains the stream identified by the content URL included in the stream request information from the content management table 310. Subsequently, the distribution controlling unit 302 transmits the stream so obtained to the digital television 100 via the input/output unit 303.

### (3) The Input/output unit 303

The input/output unit 303 receives information (file request information and stream request information) from the digital television 100 via the network 2 and outputs the information so received to the distribution controlling unit 302.

In addition, the input/output unit 303 receives a playback control file and a stream from the distribution controlling unit 302 and transmits the playback control file and the stream to the digital television 100 via the network 2.

### 1.4 Structure of the Digital television 100

The digital television 100 is, in specific, a plasma television and receives streams from the distribution server 300 via the network 2 and plays back the streams so received.

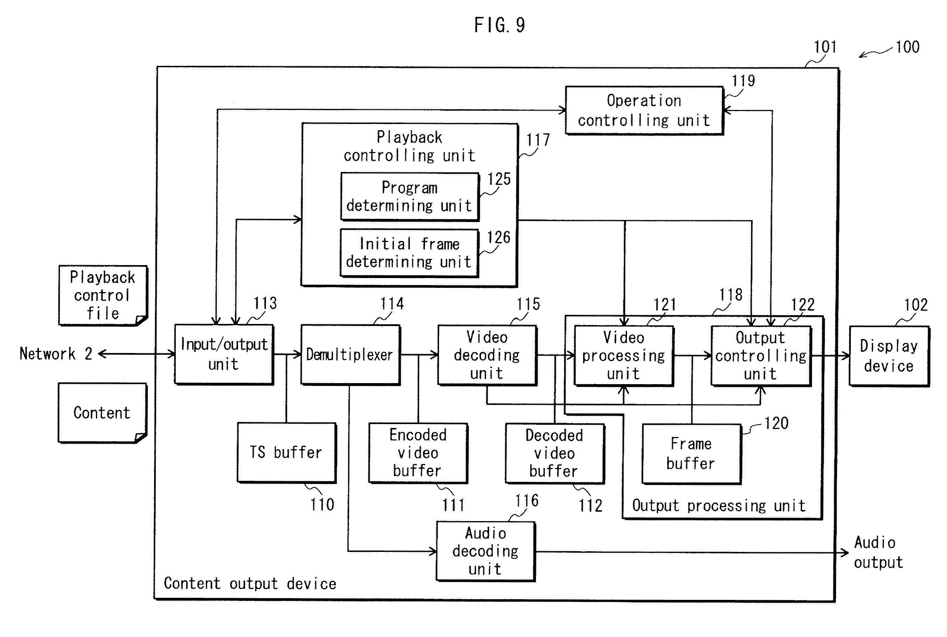

The digital television 100 includes a content output device 101 and a display device 102 as illustrated in Fig. 9.

The content output device 101 decodes streams received from the distribution server 300, and outputs the decoded streams either in an output mode for 2D video (2D output mode) or an output mode for 3D video (3D output mode). More specifically, the content output device 101 switches the output mode to be applied to a stream to the 2D output mode when a stream received from the distribution server 300 is constituted of 2D video and switches the output mode to the 3D output mode when the stream received from the distribution server 300 is constituted of 3D video. Here, it is to be noted that video is output at an output cycle of 60 Hz when the output mode is the 2D output mode, whereas video is output in an output cycle of 120 Hz when the output mode is the 3D output mode. Further, a "3D video playback control (3D output mode)" as termed herein refers to outputting video at an output cycle of 120 Hz, whereas a "2D video playback control (2D output mode) as termed herein refers to outputting video at an output cycle of 60 Hz.

The display device 102 displays video output from the content output device 101.

In the following, explanation is provided of the structure of the content output device 101.

The content output device 101 includes: a TS buffer 110; an encoded video buffer 111; a decoded video buffer 112; an input/output unit 113; a demultiplexer 114; a video decoding unit 115; an audio decoding unit 116; a playback controlling unit 117; an output processing unit 118; and an operation controlling unit 119.

### (1) The Operation Control Unit 119

The operation controlling unit 119 specifies a playback control file URL identifying content whose distribution has been requested. The specification of the playback control file URL is performed according to user operations made by a user (viewer).

Subsequently, the operation controlling unit 119 generates file request information including the specified playback control file URL, and transmits the file request information so generated to the distribution server 300 via the input/output unit 113.

The specification of the playback control file URL by the operation controlling unit 119 is performed as described in the following.

The operation controlling unit 119, when making a request for content with respect to the distribution server 300, receives playback control file URLs and names of content (streams) managed by the distribution server 300 from the distribution server 300. When receiving the playback control file URLs and the names of the streams, the operation controlling unit 119 causes the display device 102 to display a list of the names of the streams. When a user operation is performed by the user of selecting a name of a given stream among the names of streams displayed in the list, the operation controlling unit 119 specifies a playback control file URL corresponding to the name of the content selected by the user.

### (2) The Input/output Unit 113

The input/output unit 113 receives file request information from the operation controlling unit 119 and transmits the file request information so received to the distribution server 300 via the network 2.

The input/output unit 113 receives a playback control file from the distribution server 300 and outputs the playback control file so received to the playback controlling unit 117.

In addition, the input/output unit 113 receives a stream from the distribution server 300 and stores the stream so received to the TS buffer 110.

### (3) The Playback Control Unit 117

The playback controlling unit 117 includes a program determining unit 125 and an initial frame determining unit 126 as illustrated in Fig. 9.

### (3-1) The Program Determining Unit 125

The program determining unit 125 determines whether or not the description element 321 as illustrated in Fig. 8 is included in the playback control file. That is, the program determining unit 125 determines, by using the playback control file, whether a distribution-target stream is constituted of only 2D video or otherwise, includes 3D video.

When determining that the stream is constituted of only 2D video, the program determining unit 125 outputs a first reference instruction and a 2D output instruction to the output processing unit 118. The first reference instruction indicates that the identification information in the SEIs is not to be referred to, and the 2D output instruction indicates that the output mode to be applied to the stream is the 2D output mode.

Contrariwise, when determining that the description element 321 is included in the playback control file, or in other words, that a distribution-target stream includes 3D video, the program determining unit 125 determines whether or not the program state flag indicates that the identification information included in the SEIs is to be referred to.

When determining that the program state flag indicates that the identification information included in the SEIs is to be referred to, the program determining unit 125 outputs composition information and a second reference instruction to the output processing unit 118. The composition information is in accordance with description in the 3D composition state flag of the description element 321, and indicates whether 3D video is generated in the Side-by-Side format or the Top-and-Bottom format. The second reference instruction indicates that the identification information in the SEIs is to be referred to.

When determining that the program state flag indicates that the identification information included in the SEIs is not to be referred to, the program determining unit 125 outputs the first reference instruction, the composition information, and a 3D output instruction to the output processing unit 118. The 3D output information indicates that the output mode to be applied to the stream is the 3D output mode.

### (3-2) The Initial Frame Determining Unit 126

The initial frame determining unit 126 performs the operations as described in the following when the program determining unit 125 determines that (i) the playback control file includes the description element 321 and (ii) the program state flag indicates that the identification information included in the SEIs is to be referred to.

The initial frame determining unit 126 determines whether the initial frame state flag indicates 3D or 2D.

When determining that the initial frame state flag indicates 2D, the initial frame determining unit 126 outputs the 2D output instruction to the output processing unit 118. Contrariwise, when determining that the initial frame state flag indicates 3D, the initial frame determining unit 126 outputs the 3D output instruction to the output processing unit 118.

### (4) The TS Buffer 110

The TS buffer 110 is a buffer having a storage area for storing a stream distributed from the distribution server 300.

### (5) The Demultiplexer 114

The demultiplexer 114 demultiplexes a received stream into a video stream constituting the video portion of the stream and an audio stream constituting the audio portion of the stream. Further, the demultiplexer 114 outputs the video stream so obtained to the encoded video buffer 111 and outputs the audio stream so obtained to the audio decoding unit 116.

### (6) The Encoded Video Buffer 111

The encoded video buffer 111 is a buffer having a storage area for storing a video stream. A video stream stored in the encoded video buffer 111 is constituted of encoded frames, or in other words, frames that have not yet been decoded.

### (7) The Video Decoding Unit 115

The video decoding unit 115 reads out a video stream constituting 2D and/or 3D video from the encoded video buffer 111, decodes the video stream read out to obtain video frames, and obtains SEIs provided to the video frames so obtained. Note that here, the video decoding unit does not cut out left-view images and right-view images from decoded 3D video frames upon decoding the 3D video frames.

Further, the video decoding unit 115 stores the decoded video frames to the decoded video buffer 112 and outputs the SEIs obtained to the output processing unit 118.

### (8) The Decoded Video Buffer 112

The decoded video buffer 112 is a buffer having a storage area for storing decoded video frames.

### (9) The Output Processing Unit 118

The output processing unit 118 switches the output mode to be applied to a decoded video frame according to whether the decoded video frame is a 2D video frame or a 3D video frame and outputs the decoded video frame to the display device 102.

The output processing unit 118 includes a frame buffer 120, a video processing unit 121, and an output controlling unit 122 as illustrated in Fig. 9.

### (9-1) The Frame Buffer 120

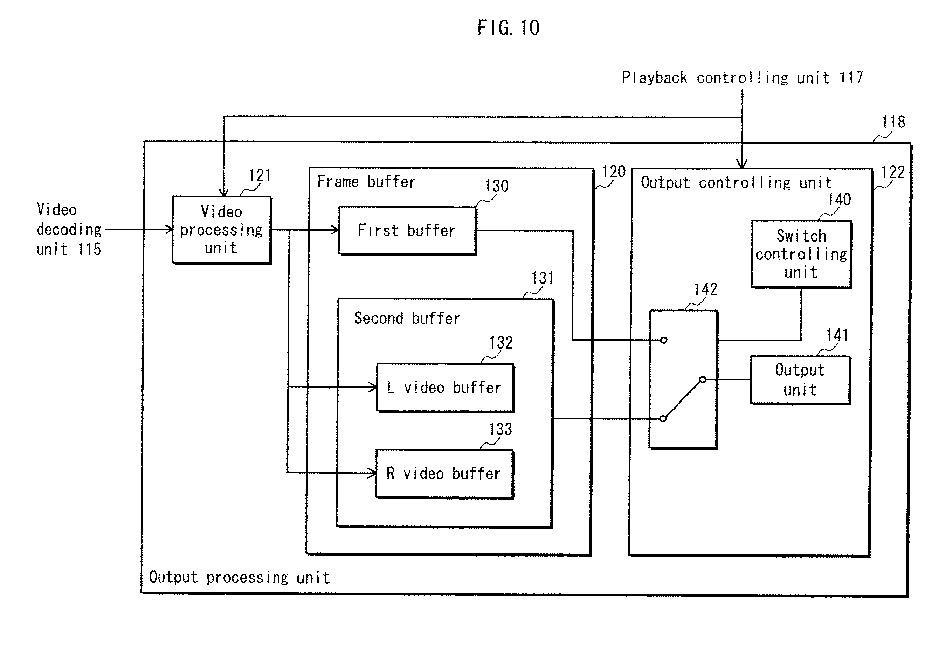

The frame buffer 120 includes a first buffer 130 and a second buffer 131 as illustrated in Fig. 10.

The first buffer 130 is a buffer for storing video frames constituting 2D video (referred to as "2D video frames").

The second buffer 131 includes an L video buffer 132 and an R video buffer 133, and is a buffer for storing 3D video frames. More specifically, the L video buffer 132 stores left-view video frames (referred to hereinafter as "L video frames") and the R video buffer 133 stores right-view video frames (referred to hereinafter as "R video frames").

### (9-2) The Video Processing Unit 121

The video processing unit 121 performs processing of video frames to be output while referring to the identification information included in the SEIs and video frames to be output while not referring to the identification information included in the SEIs according to instructions provided from the playback controlling unit 117.

### (When Referring to Identification Information Included in the SEIs)

The video processing unit 121 receives the second reference instruction and the composition information from the program determining unit 125 of the playback controlling unit 117.

The video processing unit 121 reads out a processing-target video frame from the decoded video buffer 112. When identification information included in the SEI corresponding to the video frame does not exist or when the identification information indicates that the video frame is a 2D video frame, the video processing unit 121 writes the video frame read out to the first buffer 130 and outputs the 2D output instruction indicating that the output mode to be applied to the video frame is the 2D output mode to the output controlling unit 122.

Contrariwise, when reading out a processing-target video frame from the decoded video buffer 112 and further, when the identification information included in the SEI corresponding to the video frame indicates that the video frame is a 3D video frame, the video processing unit 121 generates an L video frame and an R video frame from the video frame read out, and writes the L video frame to the L video buffer 132 and writes the R video frame to the R video buffer 133. In this case, the video processing unit 121 outputs the 3D output instruction indicating that the output mode to be applied to the video frame is the 3D output mode to the output controlling unit 122. In specific, when the video frame is generated in the Side-by-Side format, the video processing unit 121 divides the video frame into left and right sides, and enlarges each of the sides in the horizontal direction so as to obtain the L video frame and the R video frame. Similarly, when the video stream is generated in the Top-and-Bottom format, the video processing unit 121 divides the video frame into top and bottom halves, and enlarges each of the halves in the vertical direction so as to obtain the L video frame and the R video frame.

### (When Not Referring to Identification Information Included in the SEIs)

When only receiving the first reference instruction, the video processing unit 121 determines that the stream to be output is constituted of only 2D video. In such a case, the video processing unit 121 reads out a processing-target video frame from the decoded video buffer 112, and writes the video frame read out to the first buffer 130 without referring to the identification information in the SEI corresponding to the video frame.

Contrariwise, when receiving both the first reference instruction and the composition information, the video processing unit 121 determines that the stream to be output is constituted of only 3D video. In such a case, the video processing unit 121 reads out a processing-target video frame from the decoded video buffer 112, and generates an L video frame and an R video frame from the video frame read out according to the composition information. Here, the identification information included in the SEI of the video frame is not referred to. Further, the video processing unit 121 writes the L video frame so generated to the L video buffer 132, and writes the R video frame so generated to the R video buffer 133. Here, explanation concerning the manner in which an L video frame and an R video frame are generated according to the composition information is omitted, since explanation thereof has been already provided in the above.

### (9-3) The Output Controlling Unit 122

The output controlling unit 122 includes a switch controlling unit 140, an output unit 141, and a switch 142 as illustrated in Fig. 10.

### (The Switch 142)

The switch 142 switches the buffer connected to the output unit 141 between the first buffer 130 and the second buffer 131.

### (The Switch Controlling Unit 140)

The switch controlling unit 140 controls the switch and thereby switches the buffer connected to the output unit 141. In specific, the switch controlling unit 140 controls the switch 142 such that the output unit 141 is connected to the first buffer 130 when receiving the 2D output instruction from the playback controlling unit 117 and the video processing unit 121. Contrariwise, the switch controlling unit 140 controls the switch 142 such that the output unit 141 is connected to the second buffer 131 when receiving the 3D output instruction from the playback controlling unit 117 and the video processing unit 121.

### (The Output Unit 141)

The output unit 141 switches the output cycle at which the video is output according to instructions provided from the playback controlling unit 117 and the video processing unit 121 and outputs the video to the display device 102. In specific, the output unit 141 sets the output cycle to 60 Hz when the 2D output instruction has been provided from the playback controlling unit 117 and the video processing unit 121. Further, the output unit 141 reads out 2D images which are to be output from the first buffer 130 connected therewith via the switch 142, and outputs the 2D images to the display device 102. Contrariwise, the output unit 141 sets the output cycle to 120 Hz when the 3D output instruction has been provided from the playback controlling unit 117 and the video processing unit 121. Further, the output unit 141 reads out 3D images which are to be output from the L video buffer 132 and the R video buffer 133 in alternation, and outputs the 3D images so read out to the display device 102. As already explained in the above, the L video buffer 132 and the R video buffer 133 are included in the second buffer 131 connected with the output unit 141 via the switch 142. Here, explanation is provided under the presumption that, in an initial state (at a point where a playback control file is received), the output cycle is set to 60 Hz.

In addition, the output unit 141 does not perform the switching between output cycles when the output mode specified by the instructions provided from the playback controlling unit 117 and the video processing unit 121 is the same as the output mode applied immediately before the reception of the instructions. For instance, when the 2D output instruction is received in a case where the present output mode is the 2D output mode, or that is, the output cycle of 60 Hz, the output unit 141 does not perform the switching between output cycles. Similarly, when the 3D output instruction is received in a case where the present output mode is the 3D output mode, or that is, the output cycle of 120 Hz, the output unit 141 does not perform the switching between output cycles.

As described in the above, the output unit 141 changes the output mode to the 3D output mode (i.e. output cycle of 120 Hz) when receiving the 3D output instruction from the playback controlling unit 117. At this point where the output unit 141 changes the output mode to the 3D output mode following the reception of the 3D output instruction, the decoding of the stream has not yet been executed. That is, the output unit 141, when the initial frame of the stream is a 3D video frame, changes the output mode to the 3D mode before the decoding of the stream is started and waits for the video processing unit 121 to perform the above-mentioned processing. In other words, the output unit 141 enters an output standby state. As such, the output unit 141 prepares for output of a given frame by setting the output mode to be applied to the frame to either the 2D output mode or the 3D output mode according to the instruction provided from the playback controlling unit 117.

### (10) Audio Decoding Unit 116

The audio decoding unit 116 receives an audio stream from the demultiplexer 114, decodes the audio stream so received to generate audio, and outputs the audio so generated.

### 1.5 Operation

### (1) Overview of Operations of the Content Distribution System 1

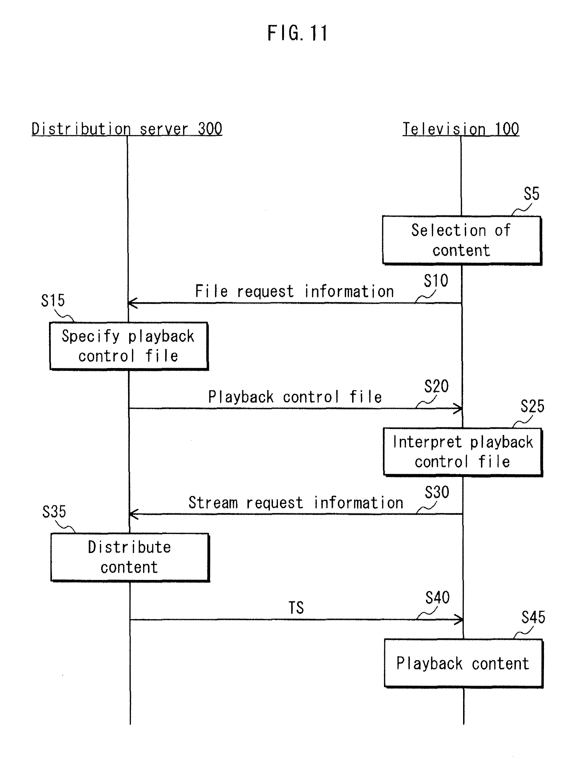

In the following, an overview is provided of the operations of the content distribution system 1 with reference to the flow of processing illustrated in Fig. 11.

When a selection of content (a stream) whose distribution is requested is made as a result of user operations performed by a user (Step S5), the digital television 100 transmits file request information including a playback control file URL specifying a playback control file corresponding to the selected content to the distribution server 300 (Step S10).

The distribution server 300 specifies the playback control file corresponding to the playback control file URL received from the digital television 100 (Step S15) and transmits the playback control file so specified to the digital television 100 (Step S20).

Upon receiving the playback control file, the digital television 100 interprets the content of the playback control file (Step S25). Subsequently, the digital television 100 transmits stream request information to the distribution server 300 (Step S30).

Upon receiving the stream request information, the distribution server 300 distributes content (a stream, or more specifically, a TS) whose distribution has been requested to the digital television 100 (Steps S35, S40).

The digital television 100 receives the stream from the distribution server 300, decodes the stream, and plays back the stream employing an appropriate output mode (Step S45). The output mode is either the 2D output mode for 2D video or the 3D output mode for 3D video.

### (2) Playback Operations of the Digital Television 100

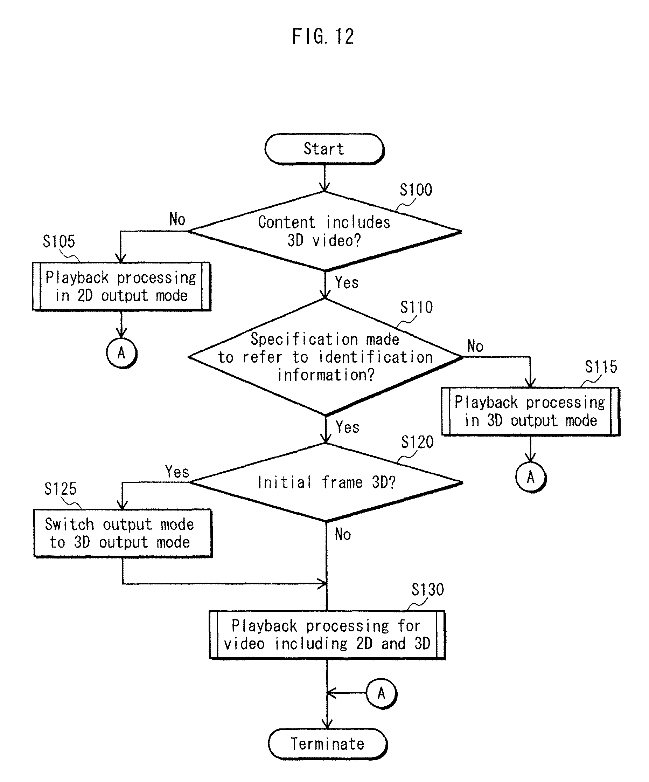

In the following, explanation is provided of the operations of the digital television 100 when playing back a stream, or more particularly, of the detailed operations in Steps S25 and S45 illustrated in Fig. 11, with reference to the flowchart in Fig. 12.

The program determining unit 125 determines whether or not the description element 321 illustrated in Fig. 8 exists, or that is, whether or not the stream distributed includes 3D video (Step S100).

When the program determining unit 125 determines that the stream distributed does not include 3D video, or in other words, that the stream distributed includes only 2D video ("NO" in Step S100), the output processing unit 118 plays back each of the video frames included in the stream in the 2D output mode without referring to the identification information included in the corresponding SEI (Step S 105).

When determining that the stream distributed includes 3D video ("YES" in Step S100), the program determining unit 125 determines whether the program state flag indicates that the identification information included in the SEIs is to be referred to or indicates that the identification information included in the SEIs is not to be referred to (Step S 110).

When the program determining unit 125 determines that the playback control file indicates that the identification information in the SEIs is not to be referred to, or that is, when determining that *"false"* is set to *"signaling"* ("NO" in Step S110), the output processing unit 118 plays back each of the video frames contained in the stream in the 3D output mode without referring to the identification information in the SEIs for decoding each of the frames (Step S115).

Contrariwise, when the program determining unit 125 determines that the playback control file indicates that the identification information included in the SEIs is to be referred to, or that is, when determining that *"true"* is set to "*signaling*" ("YES" in Step S110), the initial frame determining unit 126 determines whether the initial frame state flag indicates 2D or 3D (Step S120).

When the initial frame determining unit 126 determines that the initial frame state flag indicates 3D, or that is, when determining that "*3d*" is set to *"beginning"* ("YES" in Step S120), the output processing unit 118 switches the output mode to the 3D output mode (Step S125). More specifically, the switch controlling unit 140 controls the switch 142 so that the switch 142 is connected to the second buffer 131, and the output unit 141 changes the output cycle to 120 Hz.

When Step S125 has been executed or when the initial frame determining unit 126 determines that the initial frame state flag indicates 2D (or that is, when determining that "*2d*" is set to "*beginning*") ("NO" in Step S120), the output processing unit 118 performs playback processing for video including both 2D and 3D video (Step S130).

### (3) Playback Operations in the 2D Output Mode

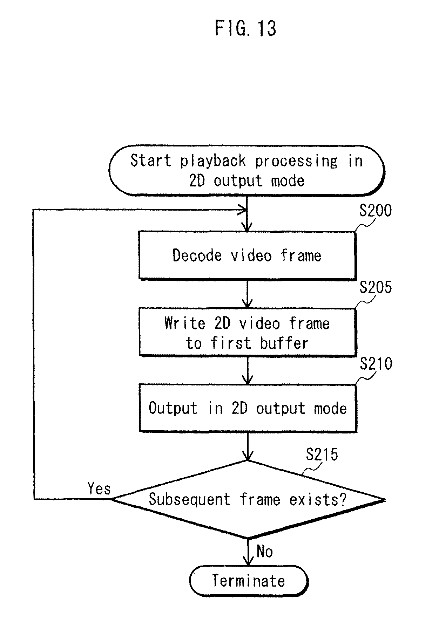

In the following, explanation is provided of operations involved in playback processing in the 2D output mode performed in Step S105 illustrated in Fig. 12, with reference to the flowchart in Fig. 13.

In the following explanation, presumption is made that, upon the commencement of playback processing in the 2D output mode, the video processing unit 121 has received only the first reference instruction from the playback controlling unit 117 according to the result of the determination made in Step S100 illustrated in Fig. 12. In other words, it is presumed that, at this point, the video processing unit 121 has already determined that the stream to be output is constituted of only 2D video. In addition, it is also presumed that, at this point, the output controlling unit 122 has already received the 2D output instruction from the playback controlling unit 117 according to the result of the determination made in Step S100 illustrated in Fig. 12.

The video decoding unit 115 decodes the video stream stored in the encoded video buffer 111, and writes the video frames obtained to the decoded video buffer 112 (Step S200).

Subsequently, the video processing unit 121 reads out a processing-target video frame, i.e. a 2D video frame, from the decoded video buffer 112, and writes the 2D video frame to the first buffer 130 without referring to the identification information included in the SEI of the 2D video frame (Step 205).

The output unit 141 sets the output cycle to 60 Hz, reads out the 2D image to be output from the first buffer 130 connected to the switch 142, and outputs the 2D image obtained to the display device 102 (Step S210).

The video decoding unit 115 determines whether or not there exists video to be subsequently decoded (Step S215). When determining that video to be subsequently decoded exists ("YES" in Step S215), the video decoding unit 115 executes the processing in Step S200. Contrariwise, when determining that video to be subsequently decoded does not exist ("NO" in Step S215), processing is terminated.

### (4) Playback Operations in the 3D Output Mode

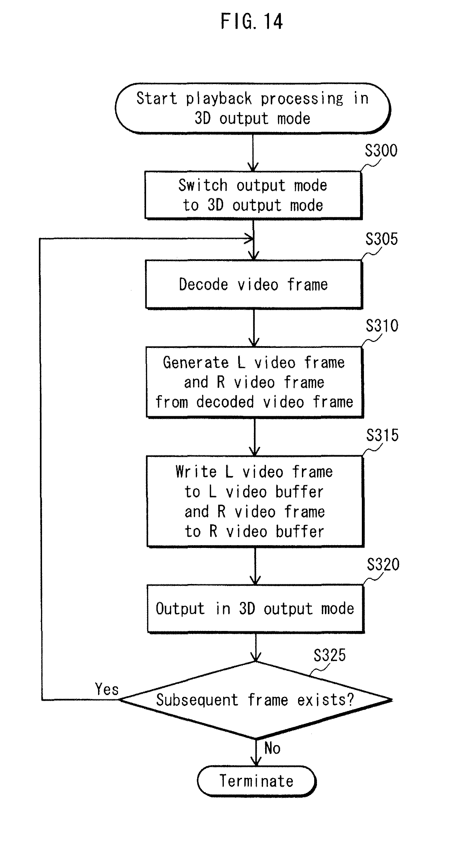

In the following, explanation is provided of operations involved in playback processing in the 3D output mode performed in Step S115 illustrated in Fig. 12, with reference to the flowchart in Fig. 14.

In the following explanation, presumption is made that, upon the commencement of playback processing in the 3D output mode, the video processing unit 121 has received both the first reference instruction and the composition information from the playback controlling unit 117 according to the result of the determination made in Steps S100 and S110 illustrated in Fig. 12. In other words, it is presumed that, at this point, the video processing unit 121 has already made a determination that the stream to be output is constituted of only 3D video.

When receiving the 3D output instruction from the playback controlling unit 117, the switch controlling unit 140 controls the switch 142 so that the switch 142 is connected to the second buffer 131 (Step S300). Further, the output unit 141 switches the output cycle to 120 Hz.

The video decoding unit 115 decodes the video stream stored in the encoded video buffer 111, and writes the video frames obtained to the decoded video buffer 112 (Step S305),

The video processing unit 121, when reading out a processing-target video frame from the decoded video buffer 112, generates an L video frame and an R video frame from the video frame according to the composition information (Step S310). Here, the identification information included in the SEI of the video frame is not referred to. Further, the video processing unit 121 writes the L video frame so generated to the L video buffer 132 and writes the R video frame so generated to the R video buffer 133 (Step S315).

The output unit 141 sets the output cycle to 120 Hz, reads out frames to be output from the L video buffer 132 and the R video buffer 133 in alternation, and outputs the frame so read out to the display device 102 (Step S320). The L video buffer 132 and the R video buffer 133 are included in the second buffer 131 connected with the switch 142.

Next, the video decoding unit 115 determines whether or not there exists a frame to be subsequently decoded (Step S325). When determining that a frame to be subsequently decoded exists ("YES" in Step S325), the video decoding unit 115 executes the processing in Step S305. Contrariwise, when determining that a frame to be subsequently decoded does not exist ("NO" in Step S325), processing is terminated.

### (5) Playback Operations for Video Including Both 2D and 3D Video

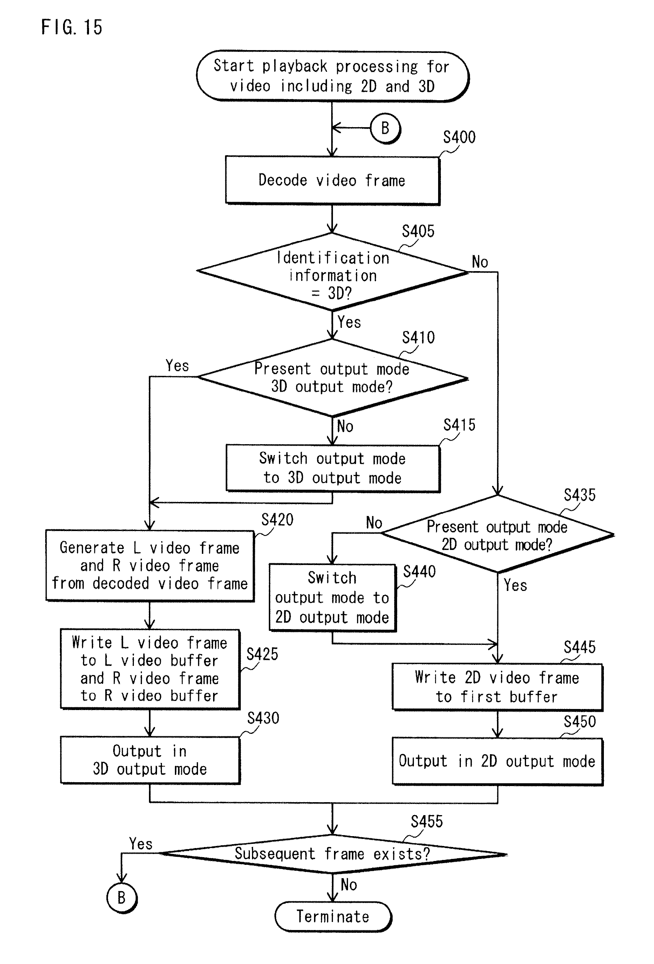

In the following, explanation is provided of playback processing for video including both 2D and 3D video performed in Step S130 illustrated in Fig. 12, with reference to the flowchart in Fig. 15.

In the following explanation, a presumption is made that, upon the commencement of the playback processing for video including both 2D and 3D video, the video processing unit 121 has received both the second reference instruction and the composition information from the playback controlling unit 117 according to the result of the determination made in Steps S100 and S110 illustrated in Fig. 12. In other words, it is presumed that, at this point, the video processing unit 121 has already made a determination that the stream to be output is constituted of both 2D and 3D video.

The video decoding unit 115 decodes the video stream stored in the encoded video buffer 111 and writes the video frame obtained to the decoded video buffer 112 (Step S400).

The video processing unit 121 determines whether or not the identification information included in the SEI of a processing-target video frame indicates that the video frame is a 3D video frame (Step S405).

When the video processing unit 121 determines that the identification information included in the SEI indicates that the video frame is a 3D video frame ("YES" in Step S405), the output unit 141 of the output controlling unit 122 determines whether the present output mode, i.e. the output cycle, is the 3D output mode (Step S410). More specifically, when determining that the identification information included in the SEI indicates that the video frame is a 3D video frame, the video processing unit 121 outputs the 3D output instruction to the output controlling unit 122. When receiving the 3D output instruction from the video processing unit 121, the output controlling unit 122 determines whether a previous instruction having been provided thereto for a preceding video frame is the 3D output instruction or the 2D output instruction. As such, when the previous instruction provided thereto is the 3D output instruction, the output controlling unit 122 is able to determine that the present output mode (i.e. output cycle) is the 3D output mode. Contrariwise, when the previous instruction provided thereto is the 2D output instruction, the output controlling unit 122 is able to determine that the present output mode (i.e. output cycle) is the 2D output mode.

When determining that the present output mode is not the 3D output mode ("NO" in Step S410), the output unit 141 switches the output mode to the 3D output mode, or in other words, switches the output cycle to 120 Hz (Step S415). Following this, processing proceeds to Step S420. Contrariwise, when determining that the present output mode is the 3D output mode ("YES" in Step S410), the output unit 141 does not perform the switching between output modes, and processing proceeds to Step S420.

The video processing unit 121, when reading out a processing-target video frame from the decoded video buffer 112, generates an L video frame and an R video frame from the video frame according to the composition information (Step S420). The video processing unit 121 writes the L video frame so generated to the L video buffer 132 and writes the R video frame so generated to the R video buffer 133 (Step S425).

The output unit 141 sets the output cycle to 120 Hz, reads out images to be output from the L video buffer 132 and the R video buffer 133 in alternation, and outputs the images so read out to the display device 102 (Step S430). The L video buffer 132 and the R video buffer 133 are included in the second buffer 131 connected with the switch 142.

Contrariwise, when the video processing unit 121 determines that the identification information included in the SEI indicates that the video frame is not a 3D video frame, or in other words, that the video frame is a 2D video frame ("NO" in Step S405), the output unit 141 determines whether the present output mode, i.e. the output cycle, is the 2D output mode (Step S435). More specifically, when determining that the identification information included in the SEI indicates that the video frame is a 2D video frame, the video processing unit 121 outputs the 2D output instruction to the output controlling unit 122. As already described in the above, the output controlling unit 122, when receiving the 2D output instruction from the video processing unit 121, determines whether the previous instruction provided thereto for a preceding video frame is the 3D output instruction or the 2D output instruction.

When determining that the present output mode is not the 2D output mode ("NO" in Step S435), the output unit 141 switches the output mode to the 2D output mode, or in other words, switches the output cycle to 60 Hz (Step S440). Following this, processing proceeds to Step S445. Contrariwise, when determining that the present output mode is the 2D output mode ("YES" in Step S435), the output unit 141 does not perform the switching between output modes, and processing proceeds to Step S445.

The video processing unit 121 reads out a processing-target video frame, i.e. a 2D video frame, from the decoded video buffer 112 and writes the 2D video frame to the first buffer 130 (Step 445).

The output unit 141 sets the output cycle to 60 Hz, reads out the 2D image to be output from the first buffer 130 connected to the switch 142, and outputs the 2D image so obtained to the display device 102 (Step S450).

The video decoding unit 115 determines whether or not there exists video to be subsequently decoded (Step S455). When determining that video to be subsequently decoded exists ("YES" in Step S455), the video decoding unit 115 executes the processing in Step S400. Contrariwise, when determining that video to be subsequently decoded does not exist ("NO" in Step S455), processing is terminated.

### (6) Specific Example of Operations

In the following, explanation is provided of the operations involved in playback processing by referring to a diagram illustrating transition of processing between components.

### (6-1) A Case where Identification Information Included in SEIs Is Referred to

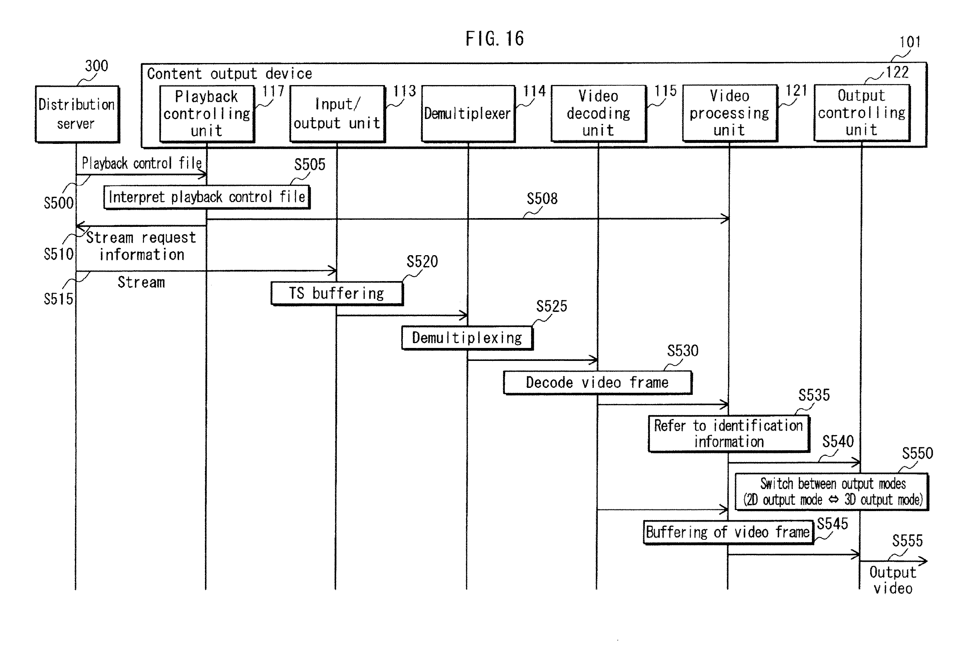

In the following, explanation is provided of playback processing performed while referring to the identification information included in the SEIs, with reference to the flow of processing illustrated in Fig. 16. Here, it should be noted that the explanation in the following is provided under the presumption that the description element 321 exists in the playback control file, and in the description element 321, (i) the 3D composition state flag indicates the Side-by-Side format, (ii) the program state flag indicates that the identification information included in the SEIs is to be referred to, and (iii) the initial frame state flag indicates 2D.

The distribution server 300 transmits the playback control file to the digital television 100 (Step S500).

The playback controlling unit 117 determines whether the playback control file received includes the description element 321, and, when determining that the description element 321 exists, interprets description included in each of the state flags included in the description element 321 (Step S505). In this case, the playback controlling unit 117 makes an interpretation that (i) the stream to be distributed includes both 2D video and 3D video, (ii) the 3D video included in the stream is in the Side-by-Side format, and (iii) the initial frame of the stream is a 2D video frame.

The playback controlling unit 117 outputs composition information to the video processing unit 121 (Step S508), The composition information is in accordance with the result of the interpretation performed with respect to the 3D composition state flag, and in this case, indicates that the 3D video included in the stream has been generated in the Side-by-Side format.

The playback controlling unit 117 transmits stream request information to the distribution server 300 (Step S510).

In response, the distribution server 300 transmits the stream having been requested to the digital television 100 (Step S515).

The input/output unit 113 performs buffering by writing the stream so received to the TS buffer 110 (Step S520). The demultiplexer 114 demultiplexes the stream written to the TS buffer 110 into a video stream and an audio stream in this case (Step S525). The video stream obtained as a result of the demultiplexing is written to the encoded video buffer 111.

The video decoding unit 115 decodes the video stream written in the encoded video buffer 111, and writes the video frames obtained to the decoded video buffer 112 (Step S530).

Subsequently, the video processing unit 121 determines whether a processing-target video frame is a 2D video frame or a 3D video frame by referring to the identification information included in the SEI of the video frame (Step S535). The video processing unit 121 outputs an instruction in accordance with the result of the determination to the output controlling unit 122 (Step S540). In specific, the video processing unit 121 outputs the 2D output instruction when determining that the video frame is a 2D video frame, and outputs the 3D output instruction when determining that the video frame is a 3D video frame.

The video processing unit 121 performs buffering with respect to the video frame according to the result of the determination in Step S535 (Step S545). In specific, the video processing unit 121 reads out the processing-target video frame from the decoded video buffer 112 and stores the video frame to the first buffer 130 when determining that the video frame is a 2D video frame. Contrariwise, when determining that the processing-target video frame is a 3D video frame, the video processing unit 121 reads out the video frame from the decoded video buffer 112, generates an L video frame and an R video frame from the video frame, and writes the L video frame to the L video buffer 132 and writes the R video frame to the R video buffer 133. Here, the generation of the L video frame and the R video frame is performed according to the composition information.

The output controlling unit 122 switches between output modes according to the instruction received from the video processing unit 121 (Step S550) and outputs images stored in the frame buffer 120 (Step S555).

### (6-2) A Case where Identification Information Included in the SEIs Is Referred to and the Initial Frame State Flag Indicates 3D

In the following, explanation is provided of playback processing performed when the identification information included in the SEIs is referred to and further, when the initial frame state flag indicates 3D. The explanation provided in the following focuses on points differing from the processing illustrated in Fig. 16.

The processing in Steps S500-S508 illustrated in Fig. 16 is performed by the distribution server 300 and the playback controlling unit 117 of the content output device 101. Here, in the processing in Step S505, the playback controlling unit 117 makes an interpretation that (i) the stream to be distributed includes both 2D video and 3D video, (ii) the 3D video included in the stream is in the Side-by-Side format, and (iii) the initial frame is a 3D video frame.

Following this, and prior to the execution of the processing in Step S510 by the playback controlling unit 117, the playback controlling unit 117 and the output controlling unit 122 execute the processing described in the following.

The playback controlling unit 117 outputs the 3D output instruction to the output controlling unit 122. The 3D output instruction is output in accordance with the result of the interpretation performed with respect to the initial frame state flag.

The output controlling unit 122 sets the output mode to the 3D output mode. More specifically, the switch controlling unit 140 controls the switch 142 so that the switch 142 is connected to the second buffer 131, and the output unit 141 changes the output cycle to 120 Hz.

When such processing (output of the 3D output instruction and setting of the 3D output mode) has been performed, the processing corresponding to Step S510 and the following steps illustrated in Fig. 16 is executed.

Since explanation concerning the processing corresponding to Step S510 and the following steps has already been provided in the above, explanation thereof is omitted in the following.

According to the operations explained in the above, the output controlling unit 122 does not need to perform the switching between output modes in Step S550 even when a determination is made by the video processing unit 121 that the initial frame is a 3D video frame. This is since the output controlling unit 122 has already set the output mode to the 3D output mode prior to this point by receiving the 3D output instruction from the playback controlling unit 117.

### (6-3) A Case where Identification Information Included in SEIs Is Not Referred to

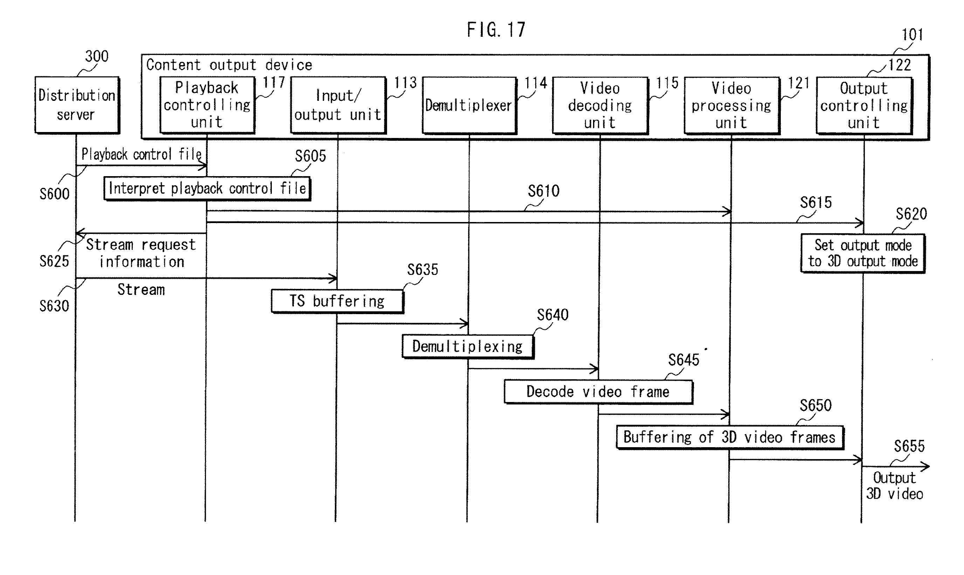

In the following, explanation is provided of playback processing performed while not referring to the identification information included in the SEIs, with reference to the flow of processing illustrated in Fig. 17, It should be noted that the explanation in the following is provided under the presumption that the description element 321 exists in the playback control file, and in the description element 321, (i) the 3D composition state flag indicates the Side-by-Side format; (ii) the program state flag indicates that the identification information included in the SEIs is not to be referred to; and (iii) the initial frame state flag indicates 3D.

The distribution server 300 transmits the playback control file to the digital television 100 (Step S600).

The playback controlling unit 117 determines whether the playback control file received includes the description element 321, and, when determining that the description element 321 exists, interprets description included in each of the state flags included in the description element 321 (Step S605). In this case, the playback controlling unit 117 makes an interpretation that (i) the stream to be distributed is constituted of only 3D video, (ii) the 3D video is in the Side-by-Side format, and (iii) the initial frame is a 3D video frame.

The playback controlling unit 117 outputs composition information to the video processing unit 121 (Step S610). The composition information is in accordance with the result of the interpretation performed with respect to the 3D composition state flag, and in this case, indicates that the 3D video included in the stream has been generated in the Side-by-Side format. Further, the playback controlling unit 117 outputs the 3D output instruction to the output controlling unit 122 (Step S615). The 3D output instruction is output in accordance with the result of the interpretation performed with respect to the initial frame state flag.

The output controlling unit 122 sets the output mode to the 3D output mode (Step S620). More specifically, the switch controlling unit 140 controls the switch 142 so that the switch 142 is connected to the second buffer 131, and the output unit 141 changes the output cycle to 120 Hz.

Following this, the playback controlling unit 117 transmits stream request information to the distribution server 300 (Step S625).

In response, the distribution server 300 transmits the stream having been requested to the digital television 100 (Step S630).

Subsequently, the input/output unit 113 performs buffering by writing the stream so received to the TS buffer 110 (Step S635). The demultiplexer 114 demultiplexes the stream written to the TS buffer 110 into a video stream and an audio stream in this case (Step S640). Here, the video stream obtained as a result of the demultiplexing is written to the encoded video buffer 111.

The video decoding unit 115 decodes the video stream written in the encoded video buffer 111, and writes the video frames obtained to the decoded video buffer 112 (Step S645).

When reading out a processing-target video frame from the decoded video buffer 112, the video processing unit 121 generates an L video frame and an R video frame from the video frame, and writes the L video frame to the L video buffer 132 and writes the R video frame to the R video buffer 133 (Step S650). Here, the identification information included in the SEI of the video frame is not referred to, and the generation of the L video frame and the R video frame is performed according to the composition information.

The output controlling unit 122 outputs the video frame stored in the frame buffer 120 in the 3D output mode (Step S655).

### 1.6 Modifications

Up to this point, description has been provided on the present invention with reference to a first embodiment thereof. However, the present invention is not limited to the first embodiment. Various modifications as described in the following are construed as being included in the scope of the present invention.

(1) In the new description element 321 provided to the playback control file described in the first embodiment, both the program state flag and the initial frame state flag are set. However, the present invention is not limited to this.

That is, only one of the program state flag and the initial frame state flag may be set to the description element 321.

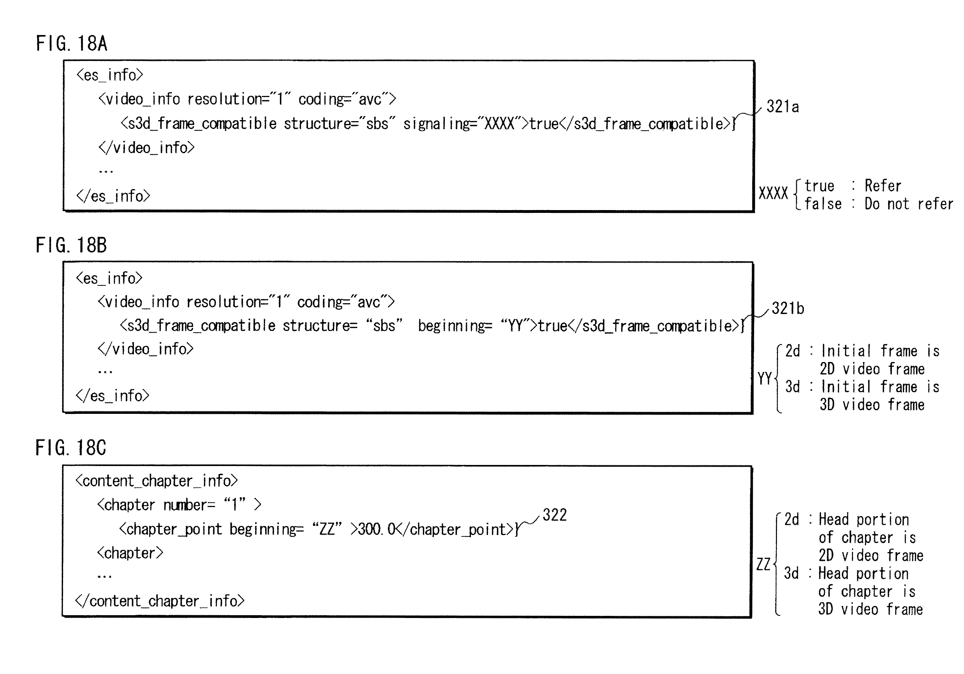

Figs. 18A and 18B illustrate description to be included in the description element 321 in such cases.

A description element 321a illustrated in Fig. 18A indicates description being provided in a case where specification is made of (i) the generation method of the 3D video frames and (ii) whether or not the identification information included in the SEIs is to be referred to.

The operations to be performed in this case may be realized by deleting Steps S120 and S125 illustrated in Fig. 12.

A description element 321b illustrated in Fig. 18B indicates description being provided in a case where specification is made of (i) the generation method of the 3D video frames and (ii) a video type of the initial frame.

The operations in this case may be realized by deleting Steps S110 and S115 illustrated in Fig. 12.

In addition, both the program state flag and the initial frame state flag are provided with respect to a stream corresponding to a single program in the first embodiment. However, the present invention is not limited to this.

When content contained in the stream is constituted of multiple chapters, the program state flag and the initial frame state flag may be set with respect to each of the chapters.

Fig. 18C illustrates an example of a description element 322 provided to the playback control file in such a case. For instance, when setting an initial frame state flag for each of the chapters constituting the content, an initial frame state flag may be additionally provided to the description of *<chapter_point>* indicating a starting point of a chapter.

In such a case, when receiving information from a user related to a chapter the user desires to view, such as a chapter number, the digital television 100 performs the processing illustrated in Fig. 12. Here, it is to be noted that, in this case, determination is made in Step S120 of whether an initial frame state flag that is included in "*content_chapter_info*" and that corresponds to the chapter whose information has been received indicates "*2d*" or "*3d*", rather than determining whether the initial frame state flag included in "*es_info*" indicates "*2d*" or *"3d".* The initial frame state flag included in the "*es_info*" and the initial frame state flag included in the "*content_chapter_info*" are respectively illustrated in Fig. 8 and Fig. 18C.

In addition, dynamic generation of the program state flag and the initial frame state flag may be performed in cases where playback is performed starting from a given position of the stream. Such cases include, for instance, a case where playback of a stream is resumed after being temporarily suspended.

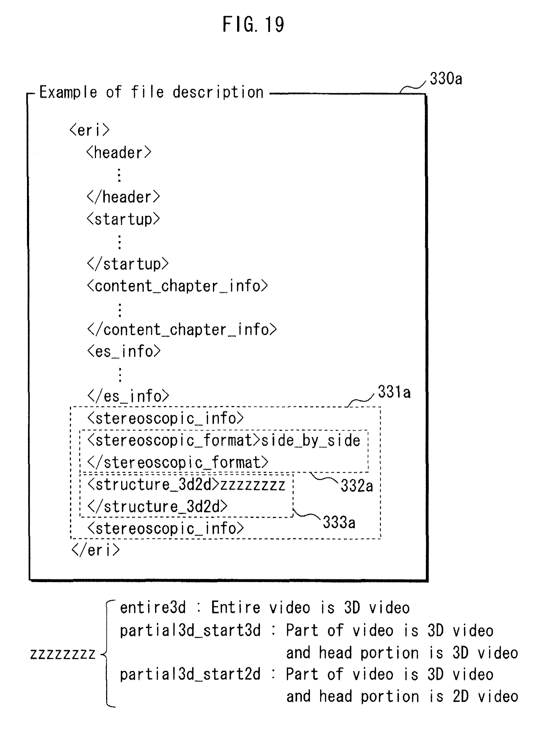

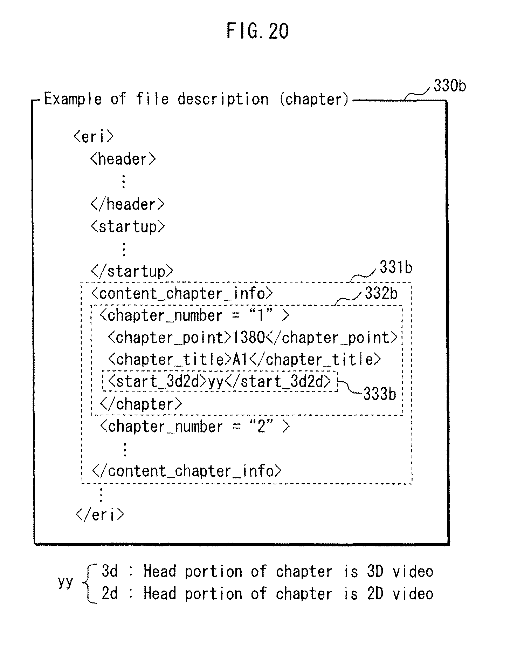

Further, the description included in the playback control file may be as illustrated in Figs. 19 and 20.

### (1-1) Fig. 19

Fig. 19 illustrates file description 330a indicating (i) that a program related thereto is a single program including only 3D video at all portions thereof and (ii) whether an initial frame of the program is a 3D video frame or a 2D video frame.

Description 331a surrounded by broken lines includes description specifying that the program indicated by the file description 330a is a 3D program and also includes description concerning the details of the 3D program. In specific, the description 331a indicates: (i) that the frames are in the Side-by-Side format; (ii) whether an entirety of the program or only a part of the program is constituted of 3D video; and (iii) whether the head portion of the program is constituted of 3D video or 2D video.

Description 332a includes description indicating that the frames of the program are in the Side-by-Side format.

Description 333a includes description indicating (i) whether an entirety of the program or only a certain portion of the program is constituted of 3D video and (ii) whether the head portion of the program is constituted of 3D video or 2D video. For instance, description of "*entire3d*" included in the description 333a indicates that the entire program is constituted of 3D video. In such a case, the digital television 100 is able to perform playback processing in the 3D output mode (refer to Fig. 14) without having to refer to the identification information provided to the frames constituting the program.

Further, description of "*partial3d_start3d*" included in the description 333a indicates that (i) a certain portion of the program is constituted of 3D video and (ii) the head portion of the program is constituted of 3D video. In such a case, the digital television 100 is able to perform playback processing for video including both 2D and 3D video by switching the output mode to the 3D output mode in advance.

Further, description of "*partial3d_start2d*" included in the description 323a indicates that (i) a certain portion of the program is constituted of 3D video and (ii) the head portion of the program is constituted of 2D video. In such a case, the digital television 100 is able to perform playback processing for video including both 2D and 3D video by not changing the output mode from the initial state (2D output mode) upon commencement of playback processing.

### (1-2) Fig. 20

Fig. 20 illustrates an example of description of the description element 321 provided in units of chapters.

More specifically, Fig. 20 illustrates file description 330b indicating (i) a starting point of each of the chapters included in a single program, (ii) a name of each of the chapters, and (iii) whether the head portion of each of the chapters is constituted of 2D video or 3D video.

Description 331b surrounded by broken lines includes description concerning each of the chapters of the program indicated by the file description 330b. For instance, description 332b includes description of a starting point (*chapter_point*), a chapter name (*chapter_title*), and a video type of the head portion of the first chapter.

Here, description 333b indicates a video type of the head portion of a chapter. In specific, "2d" indicated in the description 333b indicates that the head portion of the chapter is constituted of 2D video, whereas "*3d*" indicated in the description 333b indicates that the head portion of the chapter is constituted of 3D video.

Alternately, such description concerning the chapters may be distributed by the distribution server 300 in the form of an independent file. This arrangement is particularly advantageous in that effects such as a reduction of network load can be expected when performing additional distribution of content in units of chapters. This is since distribution can be performed of description concerning a chapter in the form of an independent file.

(2) The 3D composition state flag, the program state flag, and the initial frame state flag are set to *<video_info>* included in the playback control file in the first embodiment. However, the present invention is not limited to this.

That is, such state flags may be set to any location of the playback control file, provided that the interpretation of such state flags can be performed. Alternatively, such state flags may be provided in the form of independent files, or information similar to the state flags may be set to a header of a stream to be distributed.

(3) In the first embodiment, description has been provided presuming that the format of the streams distributed is a format specified under MPEG-4 AVC/H.264. However, the present invention is not limited to this.

The format of the streams to be distributed may be a format specified under MPEG-2 and other video compression-coding methods.

(4) In the first embodiment, description has been provided taking a digital television as an example of a playback apparatus receiving and playing back streams. However, the present invention is not limited to this, and the playback apparatus need not be a digital television.

The playback apparatus that receives and plays back streams may be a recorder, a set-top box, etc.

(5) In the first embodiment, the digital television 100 and the distribution server 300 are connected to each other via the internet. However, the present invention is not limited to this.

The digital television 100 and the distribution server 300, in combination, may be considered as a single device when presuming that connection therebetween is established via a leased line. Further, the distribution server 300 may be, for instance, a detachable device composed of a portable recording medium (an SD card, a DVD Disc, a Blu-ray Disc and the like) storing content in the form of streams.

(6) In the first embodiment, content is distributed in the form of streams via the internet. However, the present invention is not limited to this.

The content may be recorded on packaged media in the form of streams. Alternatively, the content may be content once having been broadcasted by using broadcast waves and then recorded with use of a recording device. In addition, the content may also be distributed in a downloadable form on the internet. The content may also be motion pictures produced with use of a video camera or the like. That is, the content may be distributed in any form, given that the content (stream) is stored in association with a file including information corresponding to the description element 321 as described in the above.

(7) In the first embodiment, description has been provided on switching between output cycles applied to 2D video and 3D video taking a plasma television as example. However, the present invention is not limited to this.

The technology of switching between output cycles as described in the first embodiment may be applied to any apparatus including a display device, provided that a certain amount of time is required for switching between displaying of 2D video and displaying of 3D video (that is, the switching is not completed within an interval corresponding to one video frame) due to a different panel driving method being applied for displaying each type of video.

(8) In the first embodiment, the frame buffers, namely the first buffer and the second buffer (the L image buffer and the R image buffer), are provided as different components in a physical sense. However, the present invention is not limited to this.

The first buffer, the L image buffer, and the R image buffer may be collectively embodied on one physical component, and switching between the buffers may be realized by utilizing time-sharing.

(9) In the first embodiment, the output cycle applied to 2D video is set to 1/60 seconds/cycle. However, the present invention is not limited to this.

2D video may be output at other cycles (for instance, 1/50 seconds/cycle). When making such an arrangement, 3D video is output at half the cycle at which 2D video is output (for instance, 1/100 seconds/cycle).

(10) In the first embodiment, description has been provided based on a frame compatible method such as the Side-by-Side format. However, the present invention is not limited to this.

For instance, the present invention may be applied to a service compatible method involving the use of an encoding method such as H.264/MVC.

In such a case, the determination of whether each of frames constituting content containing both 2D and 3D video is a 2D frame or a 3D frame is performed by (i) detecting whether or not a dependent view stream exists with use of a Subset sequence parameter set or the like, (ii) detecting whether or not an elementary stream containing a dependent view stream exists, or (iii) interpreting an MVC_extension_descriptor or a hierarchy_descriptor, both of which being included in the PMT and including description concerning existence/non-existence of a dependent view stream.

(11) In the first embodiment, description of information concerning content is included in the playback control file. However, the present invention is not limited to this.

For instance, description of similar information may be included as attribute information of an object element or an video element in an HTML document or a BML document.

(12) The method described in the first embodiment may be realized by storing a program including description of the procedures of the method to a memory and causing a CPU (Central Processing Unit) or the like to read out the program from the memory and execute the program.

Alternatively, a program including description of the procedures of the above-described method may be stored on a recording medium and may be distributed as such.

(13) The structures (functional blocks) pertaining to the first embodiment may be implemented as an LSI (Large Scale Integration), which is an integrated circuit. That is, each of the structures may be separately integrated into a single chip, or the structures may be integrated into a single chip including a part or all of the structures. Although description has been made on the basis of an LSI in the above, the name of the integrated circuit may differ according to the degree of integration of the chips. Other integrated circuits include an IC (Integrated Circuit), a system LSI, a super LSI, and an ultra LSI. Further, the method applied for forming integrated circuits is not limited to the LSI, and the present invention may be realized on a dedicated circuit or a general purpose processor. For example, the present invention may be realized on an FPGA (Field Programmable Gate Array) being an LSI which can be programmed after manufacturing, or a reconfigurable processor being a LSI, reconfiguration of which could be made to the connection of internal circuit cells and settings. In addition, the computation performed by the functional blocks may be performed by, for instance, a DSP (Digital Signal Processor), a CPU (Central Processing Unit) and or the like. Further, such processing steps may be recorded on a recording medium as a program, and may be realized by executing such a program.

Further in addition, if a new technology of circuit integration replacing that of the LSI emerges as a result of the progress made in the field of semiconductor technology or another technology deriving therefrom, the integration of function blocks may be performed applying such technology. At this point, there is a possibility of biotechnology being applied to induce the future development of circuit integration technology.

(14) Furthermore, combinations of the above-described embodiment and the modifications are construed as being included in the scope of the present invention.

### 2. Second Embodiment

In the first embodiment, the initial frame state flag is used when performing playback of a video stream from a head portion. However, in the following, explanation is provided of a case where the initial frame state flag is used when resuming playback of a video stream after playback of the video stream has been temporarily suspended.

A content distribution system pertaining to the present embodiment is similar to the content distribution system described in the first embodiment, and includes a distribution server 400 that distributes a program stream pertaining to program content and a receiver 600 (for instance, a playback apparatus such as a digital television) that decodes and plays back the program stream. The distribution server 400 includes, in addition to the components of the distribution server 300 described in the first embodiment, a content state management unit that stores a point of the program stream where playback has been suspended, and a playback UI generating unit that generates a user interface of the receiver 600 which enables resume playback of the program stream following suspension. The receiver 600 includes, in addition to the components of the content output device 101 described in the first embodiment, a command generating unit that notifies the distribution server 400 of a playback suspension state of the program stream, and a user interface presentation unit that presents the user interface generated by the distribution server 400 to the user. Provided with such a structure, the receiver 600 generates a command indicating whether an initial frame following the point where the playback of the program stream has been suspended is a 3D video frame or a 2D video frame, and transmits the command to the distribution server 400. Receiving the command from the receiver 600, the distribution server 400 stores therein information indicating whether the initial frame following the point where the playback of the program stream has been suspended is a 3D video frame or a 2D video frame. Further, when receiving a notification for resuming playback of the program stream from the receiver 600, the distribution server 400 notifies the receiver 600 of the operation procedures for resuming playback of the program stream and whether the initial frame following the point where the playback of the program stream has been suspended is a 3D video frame or a 2D video frame. The receiver 600, when determining that the initial frame is a 3D video frame, sets the output mode to be applied to the initial frame to the 3D video output mode. On the other hand, when determining that the initial frame is a 2D video frame, the receiver 600 sets the output mode to be applied to the initial frame to the 2D video output mode. This preparation of setting an appropriate output mode is performed by the receiver 600 prior to the decoding of the video stream. Finally, the receiver 600 decodes and plays back the video stream.

### 2.1 Structure of the Distribution Server 400

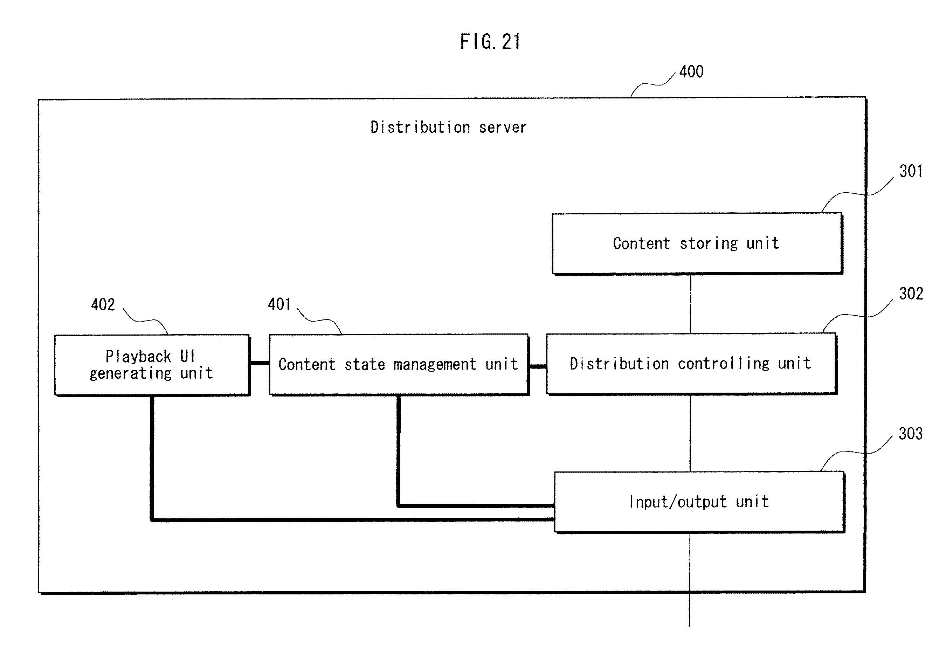

The distribution server 400 includes, in addition to the components described in the first embodiment, a content state management unit 401 and a playback UI (User Interface) generating unit 402 as illustrated in Fig. 21.

In the following, explanation is provided of the content state management unit 401 and the playback UI generating unit 402.

### (1) The Content State Management Unit 401

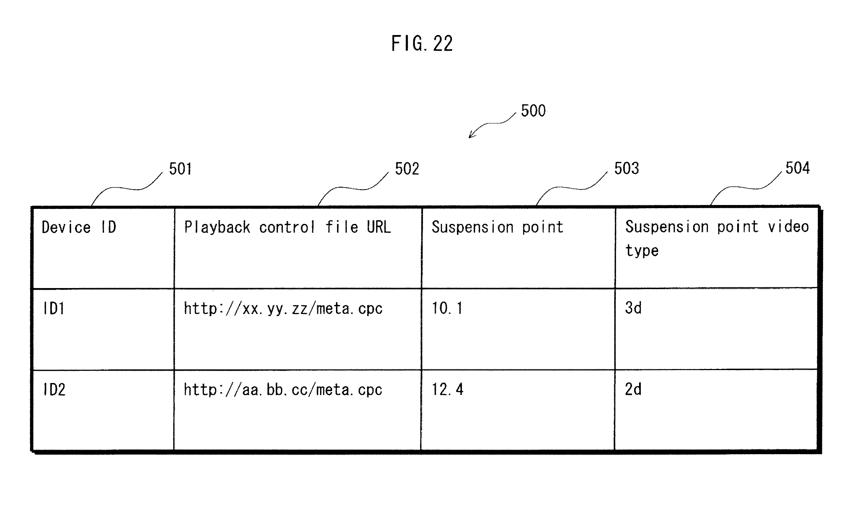

The content state management unit 401 stores a content state management table 500 as illustrated in Fig. 22. The content state management table 500 is provided with multiple areas, each of which storing a set of items. The items constituting a set include: *device ID 501, playback control file URL 502, suspension point 503,* and *suspension point video type 504*.

In specific, the content state management table 500 manages a playback suspension state for each of the users. As such, the above-described set of items including *playback control file URL 502, suspension point 503,* and *suspension point video type 504* is managed in association with each of the devices (users) indicated in *device ID 501*.

The item *playback control file URL 502* is equivalent to *playback control file URL 311*, which is an item included in the content management table 310 stored on the content storing unit 301. Explanation of the content management file 310 has been provided in the first embodiment. The playback control file indicated in *playback control file URL 502* corresponds to content presently being viewed by a corresponding user.

*Suspension point 503* indicates a point of the content where playback has been suspended by the receiver 600. In specific, *suspension point 503* indicates a relative time from the head portion of the content (for instance, 10 seconds from the head portion).

*Suspension point video type 504* indicates a video type of the content at the point where playback has been suspended by the receiver 600. In the example illustrated in Fig. 22, *suspension point video type 504* indicates *"3d"* when the video type at the suspension point is 3D video, whereas *suspension point video type 504* indicates "*2d*" when the video type at the suspension point is 2D video.

### (2) The Playback UI Generating Unit 402

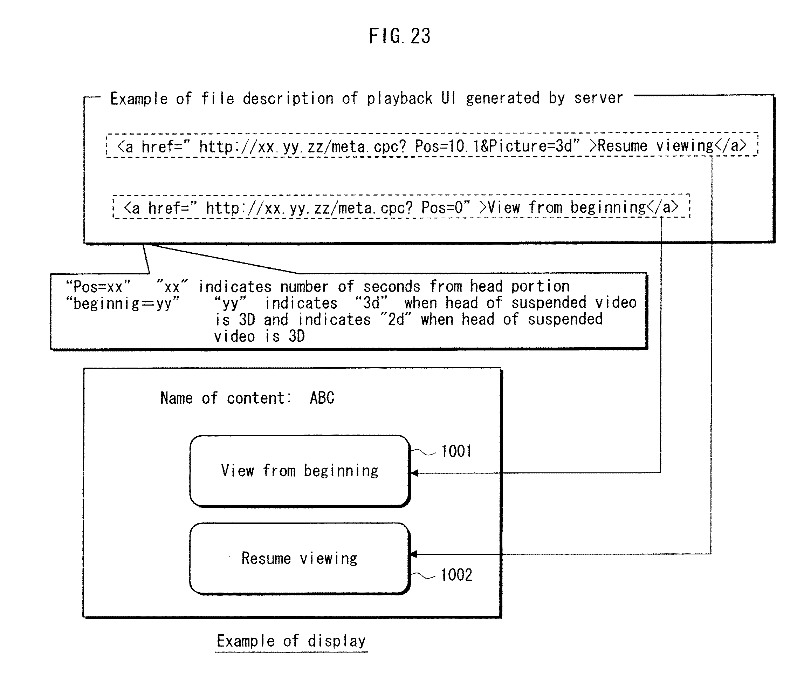

The playback UI generating unit 402 generates a UI enabling the receiver 600 to perform resume playback of content whose playback has been suspended. In specific, the UI is generated by using programming languages. The programming languages to be used here include declarative markup language such as HTML and procedural languages such as Java (registered trademark). Fig. 23 illustrates an example of the playback UI. Although the playback UI illustrated in Fig. 23 is generated according to the HTML format, other programming languages may be applied in the generation of the playback UI.

In Fig. 23, *"http:*//*xx.yy.zz*/*meta.cpc"* is a playback control file URL of a playback control file corresponding to the content whose playback is to be resumed. Explanation concerning the playback control file URL has been provided in the first embodiment. Further, in Fig 23, "*Pos=10.1*" indicates a point of the content where playback has been suspended by the receiver 600. In specific, *"Pos=10.1"* indicates a relative time from the head portion of the content (e.g. 10.1 seconds from the head portion). In Fig. 23, "*Picture=3d*" indicates the video type of the content piece at the suspension point, where the playback of the content has been suspended by the receiver 600. In the example illustrated in Fig. 23, "*3d*" indicates that the video type at the suspension point is 3D video, whereas "2d" indicates that the video type at the suspension point is 2D video. The playback UI generating unit 402 generates the playback UI by using the information included in the content state management table 500 managed by the content state management unit 401.

In the present embodiment, explanation is provided of a method of disposing the playback UI generating unit 402 on the side of the distribution server 400 and thereby generating a user interface for the receiver 600 as a means for notifying the receiver 600 of the suspension point ("*Pos=10.1*") and the video type ("*Picture=3d*"). However, the means for notifying the receiver 600 of the suspension point and the video type is not limited to the user interface, and instead, metadata for notifying the receiver 600 of the suspension point ("*Pos=10.1*") and the video type ("*Picture=3d*") may be generated.

### 2.2 Structure of the Receiver 600

The receiver 600 has a structure similar to that of the content output device 101 described in the first embodiment, but differs in that a command generating unit 601 and a UI presentation unit 602 are additionally provided to the operation controlling unit 119.

In the following, explanation is provided on the command generating unit 601 and the UI presentation unit 602. Since description concerning the components other than the command generating unit 601 and the UI presentation unit 602 have already been provided in the first embodiment, explanation thereof is omitted in the following.

### (1) The Command Generating Unit 601

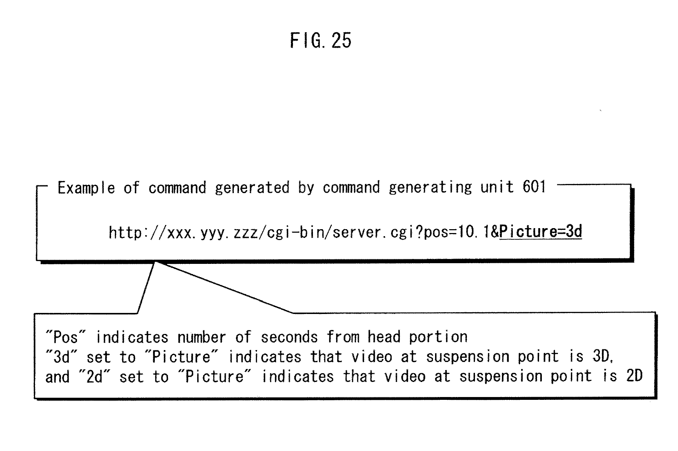

The command generating unit 601 generates a command for notifying the distribution server 400 of a suspension point state. When an instruction for suspension of playback is made via user operations, the command generating unit 601 obtains the current playback point of the content and generates a command to be sent to the distribution server 600. Fig. 25 illustrates an example of the command generated by the command generating unit 601. Although HTTP is used as the transfer protocol in the example illustrated in Fig. 25, the present invention is not limited to this. Commands may be generated in accordance with other transfer protocols as well. In the example illustrated in Fig. *25**,* "*http:*//*xxx.yyy.zzz*/*cgi-bin*/*server.cgi*" indicates a server to which the command is to be sent. Further, *"pos=10.1"* indicates a point of the content at which playback has been suspended. In specific, the suspension point is indicated as a relative time from the head portion of the content. In addition, *"Picture"* indicates the video type of the content at the suspension point. In the example illustrated in Fig. 25, "*3d*" indicates that the video type at the suspension point is 3D video, whereas "*2d*" indicates that the video type at the suspension point is 2D video. Such information as described in the above is obtained by the video processing unit 121 when the processing of suspending playback of content is conducted.

Further, although not illustrated in Fig. 25, the command includes information identifying the receiver 600. Such information is either a device *ID* or identification information that can be associated with the device *ID* on a server and is provided as description in a cookie or the like and stored in the header portion or the like of an HTTP message for transferring the command.

Further, as description has already been provided in the above, the distribution server 400 manages a playback suspension state of each of the devices indicated by the device IDs by referring to the information included in the commands received from the devices.

### (2) The UI Presentation Unit 602

The UI presentation unit 602 presents the UI which has been transmitted from the distribution server 400 to the user. As already mentioned in the above, the playback UI is generated by the playback UI generating unit 402 of the distribution server 400. Fig. 23 illustrates a displayed example of the UI. In the example illustrated in Fig. 23, a UI having buttons for playing back content is shown on a television screen or the like. In the following, explanation is provided taking description in the HTML format as an example.

Description corresponding to a button 1001 "*View from Beginning*" includes an instruction instructing the distribution server 400 to perform playback of content from the head portion (from 0 seconds). When the button 1001 is pressed, the receiver 600 determines whether the initial frame of the content is a 3D video frame or 2D video frame by referring to the playback control file as description has been provided in the first embodiment.

On the other hand, description corresponding to a button 1002 "*Resume Viewing*" includes an instruction instructing the distribution server 400 to perform resume playback of the content from the suspension point (from 10.1 seconds in this example). Further, since an indication of "*Picture=3d*" is included, the receiver 600 is able to recognize, prior to the execution of resume playback, that the head portion of the content, when performing resume playback, is 3D video. In addition, although description has been provided in the above taking as an example a UI that is displayed on a television screen, the present invention is not limited to this. Alternatively, playback operations such as *"View from Beginning*" and "*Resume Viewing*" may be associated with buttons arranged on a remote controller.

### 2.3 Content Playback Suspension Processing

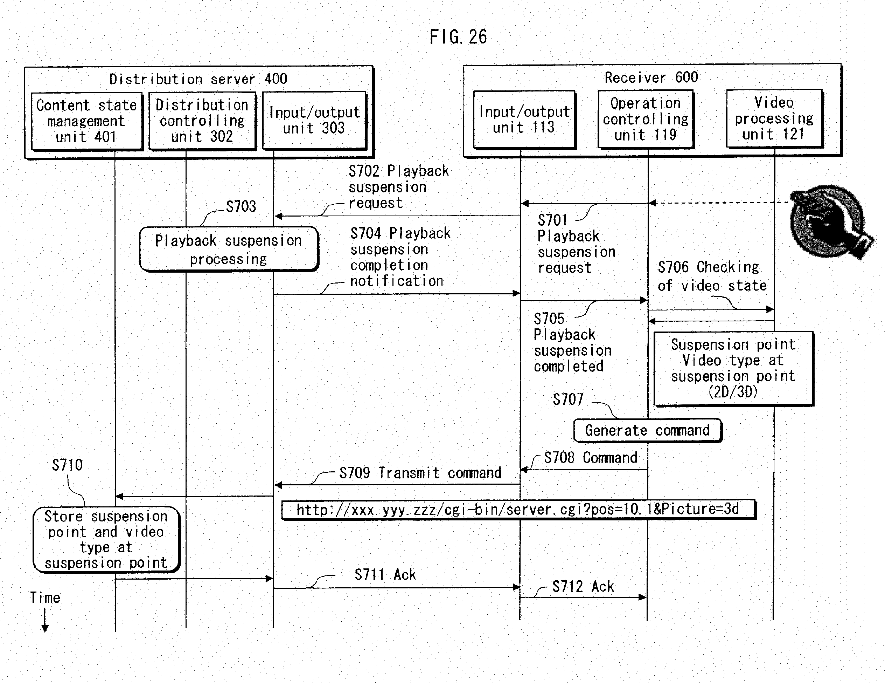

In the following, explanation is provided of content playback suspension processing with reference to the accompanying Fig. 26. Here, content playback suspension processing refers to processing performed when a user does not view video content all the way to the end but performs a user operation of suspending the playback of the video content in the midst thereof by using a remote controller or the like.

A user instructs the receiver 600 to perform suspension processing with respect to the video currently being played back by using a remote controller or the like. When such an instruction is issued by the user, the operation controlling unit 119 transmits a playback suspension request to the input/output unit 113 (Step S701).

Successively, the input/output unit 113 transmits the playback suspension request to the input/output unit 303 of the distribution server 400 (Step S702).

The input/output unit 303 and the distribution controlling unit 302 perform processing for suspending playback of the content and suspend the transmission of video (Step S703).

When the playback suspension processing has been completed, the input/output unit 303 notifies the input/output unit 113 of the receiver 600 of the completion of playback suspension (Step S704).

The input/output unit 113 notifies the operation controlling unit 119 of the completion of playback suspension (Step S705).

The operation controlling unit 119 obtains a suspension state (point of the content where playback has been suspended and the type of video at the suspension point) from the video processing unit 121 (Step S706).

The command generating unit 601 of the operation controlling unit 119 generates a command for notifying the distribution server 400 of the suspension point and the video type at the suspension point by using the information of the suspension state obtained in Step S706 (Step S707).

The operation controlling unit 119 transfers the command generated by the command generating unit 601 to the input/output unit 113 (Step S708).

The input/output unit 113 transmits the command to the input/output unit 303 of the distribution server 400 (Step S709).

The input/output unit 303 transfers the command so received to the content state management unit 401. The content state management unit 401 stores the device ID of the receiver 600, the content whose playback has been suspended, the suspension point of the content, and the video type of the content at the suspension point, as a set, to the content state management table 500. The suspension point and the video type are notified to the content state management unit 401 via the command received from the input/output unit 303 as described in the above. Subsequently, the content state management unit 401 notifies the input/output unit 303 of the completion of the processing (Step S710).

The input/output unit 303 notifies the input/output unit 113 of the receiver 600 of the completion of the command processing (Step S711).

The input/output unit 113 notifies the operation controlling unit 119 of the completion of the command processing (Step S712).

In the present example, the command indicating video suspension state is issued following the execution of the video suspension processing. However, the command indicating video suspension state may be issued prior to the execution of the video suspension processing.

### 2.4 Content Resume Playback Preparation Processing

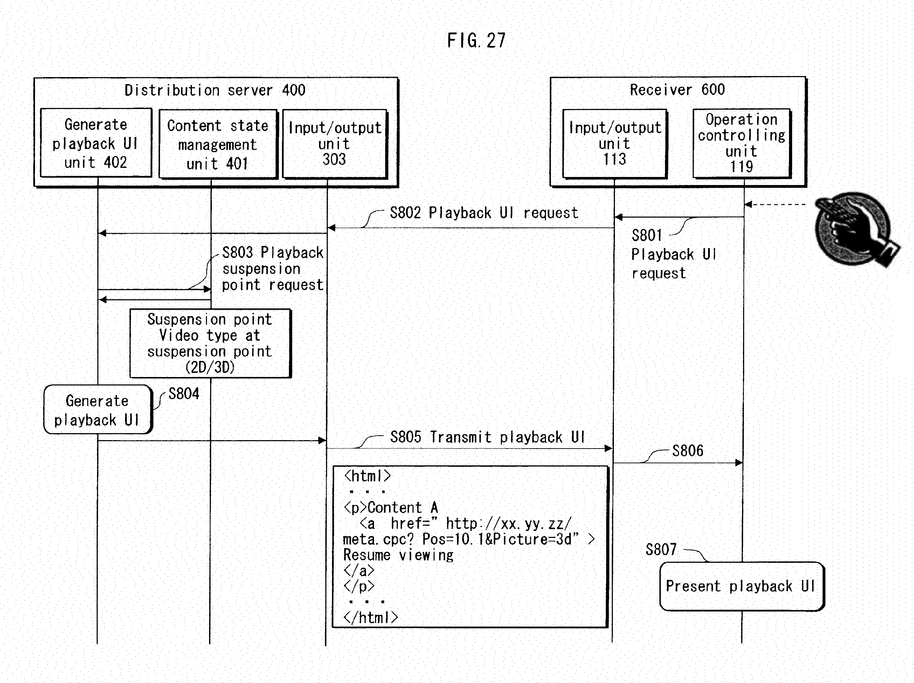

In the following, explanation is provided of content resume playback preparation processing with reference to the accompanying Fig. 27. Here, content resume playback preparation processing refers to processing of presenting, to a user, a UI using which the user is able to perform operations for resuming playback of video from a point of the content where the content has been previously viewed up to by using a remote controller or the like.

By using a remote controller or the like, the user requests the receiver 600 to display a playback UI for playing back content whose playback has been suspended. When such a request is made by the user, the operation controlling unit 119 transmits a playback UI request to the input/output unit 113 (Step S801).

The input/output unit 113 transmits the playback UI request to the input/output unit 303 of the distribution server 400 (Step S802). Here, it is to be noted that the playback UI request includes a device ID of the receiver 600.

The input/output unit 303 transmits the playback UI request to the playback Ul generating unit 402. The playback UI generating unit 402 obtains information required for generating a UI from the content state management unit 401 (Step S803). In specific, such information includes the suspension point where playback of the content has been suspended, and the video type of the content at the suspension point.

The playback UI generating unit 402 generates a UI enabling playback from the suspension point using the information obtained and transfers the UI to the input/output unit 303 in the form of data (Step S804). In the following, an example of a UI is provided, in a case where the UI data is in the HTML format.

```
 <html>
 <head>....</head>
 <body>
 .....
 <p>
 Content A
 <a href=''http://xx.yy.zz/meta.cpc? Pos=10.1 &Picture=3d">Resume Viewing </a>
 </p>
 .....
 </body>
 </html>
```

The input/output unit 303 transmits the UI data generated to the input/output unit 113 of the receiver 600 (Step S805).

The input/output unit 113 transfers the UI data to the UI presentation unit 602 of the operation controlling unit 119 (Step S806).

The UI presentation unit 602 presents, to the viewer, a UI for performing resume playback from the suspension point by using the UI data so received (Step S807).

### 2.5 Stream Playback Processing

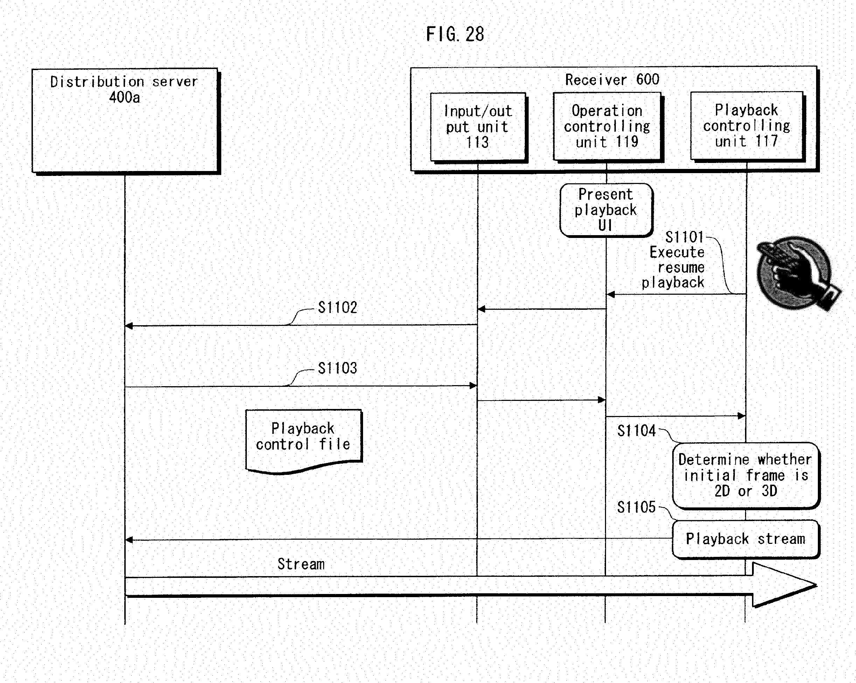

In the following, explanation is provided of processing where the viewer executes playback of video from a point where he/she has viewed the video up to by using the UI presented by the UI presentation unit 602 with reference to the accompanying Fig. 28.

When a request is made for resume playback of content through user operations (Step S1101), the receiver 600 transmits file request information including a playback control file URL specifying a playback control file corresponding to the selected content to the distribution server 400 (Step S1102).

The distribution server 400 specifies a playback control file corresponding to the playback control file URL received from the digital television receiver 600 and transmits the playback control file so specified to the receiver 600 (Step S1103).

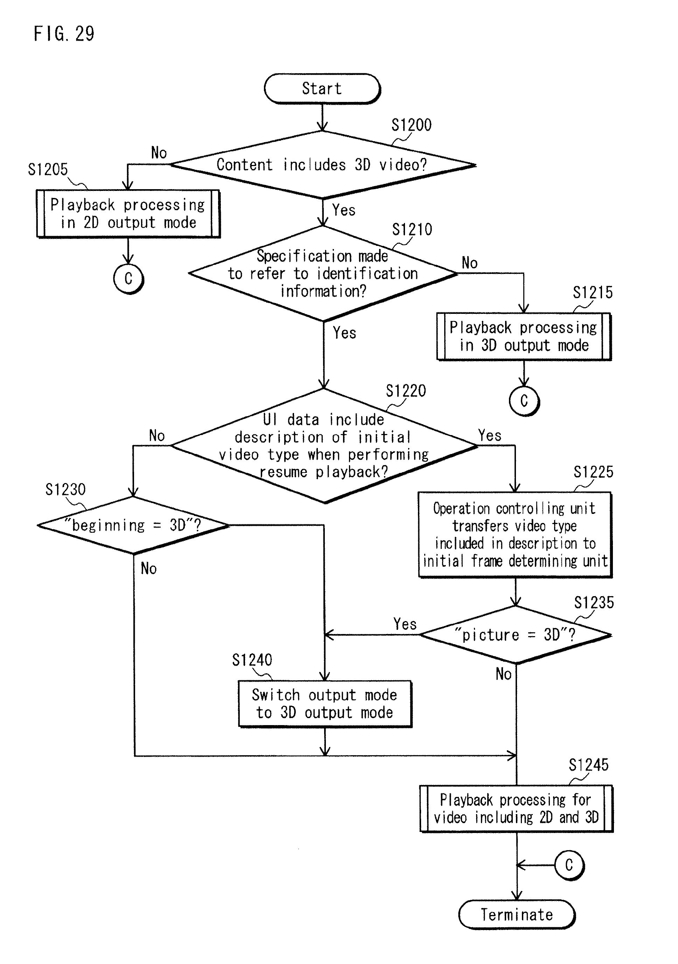

The playback controlling unit 117 of the receiver 600, when receiving the playback control file, determines whether the content to be played back is 2D video, 3D video, or video including both 2D and 3D video. When determining that the content includes both 2D and 3D video, the playback controlling unit 117 determines whether the frame to be initially played back upon the commencement of resume playback is 2D or 3D video by using the video type (2D or 3D) of the content at the point where resume playback is to be commenced (Step S1104). Here, the video type used is the video type whose description is included in the playback Ul data and which corresponds to the content having been selected in Step S1101. Subsequently, the playback controlling unit 117 executes a playback output operation (Step S1105). In the following, explanation is provided of such processing with reference to the accompanying Fig. 29.

### (1) Initial Frame Determining Processing (Step S1104)

In the following, explanation is provided of a case where the receiver 600 performs resume playback of content, and more particularly of the detailed operations performed in Step S1104 in Fig. 28 with reference to the flowchart illustrated in Fig. 29.

The program determining unit 125 determines whether or not the description element as illustrated in Fig. 8 is included in the playback control file, or that is, whether or not the stream distributed includes 3 D video (Step S1200).

When the program determining unit 125 determines that the stream distributed does not include 3D video, or in other words, that the stream distributed includes only 2D video ("NO" in Step S1200), the output processing unit 118 plays back each of the video frames contained in the stream in the 2D output mode without referring to the identification information included in the SEls for decoding each of the frames (Step S1205). The details of the processing performed in Step S1205 are similar to the processing explanation of which has been provided with reference to Fig. 13. Hence, explanation thereof is omitted in the following.

When the program determining unit 125 determines that the stream distributed includes 3D video ("YES" in Step S1200), the program determining unit 125 determines whether the program state flag included in the playback control file indicates that the identification information included in the SEls is to be referred to or that the identification information included in the SEIs is not to be referred to (Step S1210).

When the program determining unit 125 determines that the identification information included in the SEls is not to be referred to, or that is, when determining that "*false*" is set to "*signaling*" ("NO" in Step S 1210), the output processing unit 118 plays back each of the video frames included in the stream in the 3D output mode without referring to the identification information included in the SEIs (Step S1215). The details of the processing performed in Step S1215 are similar to the processing explanation of which has been provided with reference to Fig. 14. Hence, explanation thereof is omitted in the following.

The operation controlling unit 119 checks whether the UI data includes description of the video type (2D or 3D) of the content at the point where resume playback is to be commenced (Step S1220). Here, the checking is performed with respect to the description of the video type corresponding to the content having been selected.

When determining that description of the video type is included ("YES" in Step S1220), the operation controlling unit 119 transfers the video type to the initial frame determining unit 126 of the playback controlling unit 117 (Step S1225).

The initial frame determining unit 126 determines whether the frame corresponding to the head portion of the content upon the commencement of resume playback is 2D or 3D video by referring to the video type transferred thereto by the operation controlling unit 119 (Step S1235). More specifically, the initial frame determining unit 126 determines whether *"3d"* is set to the video type "*Picture*".

When the initial frame determining unit 126 determines that the video type is 3D, or that is, when determining that *"3d"* is set to "*Picture*" ("YES" in Step S1235), the output processing unit 118 switches the output mode to be applied to the content to the 3D output mode (Step S1240). More specifically, the switch controlling unit 140 controls the switch 142 so that the switch 142 is connected to the second buffer 131 and the output unit 141 changes the output cycle to 120 Hz.

When determining that description of video type is not included ("NO" in Step S1220), the initial frame determining unit 126 determines whether *"3d"* is set to *"beginning"* using the value of *"beginning"* included in the playback control file similarly as in the first embodiment (Step S1230).

When the initial frame determining unit 126 determines that *"3d"* is set to "*beginning*" ("YES" in Step S1230), processing proceeds to Step S1240.

In cases where (i) the initial frame determining unit 126 determines that "*2d*" is set to *"beginning"* ("NO" in Step S1230) after Step S1240 has been executed and (ii) the initial frame determining unit 126 determines that the video type indicates 2D, or that is, when determining that "*2d*" is set to "*Picture*" ("NO" in Step S 1235), the output processing unit 118 performs playback processing for video including both 2D and 3D video (Step S1245). The details of the processing performed in Step S1245 are similar to the processing explanation of which has been provided with reference to Fig. 15. Hence, explanation thereof is omitted in the following.

### (2) Playback Output Operations (Step S1105)

The playback output operations performed by the receiver 600 are similar to the playback output operations of the digital television 100, description of which has been provided in the first embodiment. The playback output operations performed by the receiver 600 differ from the playback output operations of the digital television 100 solely in that output is performed starting from the suspension point, rather than starting from the head portion of the video. Concerning this point, the distribution server 400 may determine the point of the video where playback is to be started, or that is, the point of the video from which distribution is to be performed by referring to the "*Pos*" information included in the command transmitted from the playback UI of the receiver 600. Alternatively, such determination may be made by referring to the information concerning the suspension point included in the content state management table 500 held by the distribution server 400.

Since video stream playback processing following this point is similar to description made in the first embodiment, explanation thereof is omitted in the following.

### 2.6 Modifications

Although description has been provided in the above on the present invention with reference to a second embodiment thereof, the present invention is not limited to such an embodiment. Various modifications as described in the following are construed as being included in the scope of the present invention.

(1) The content state management unit 401 is provided to the server 400 in the second embodiment. However, the present invention is not limited to this, and the content state management unit 401 may be provided to the receiver 600.

(2) In the second embodiment, the playback Ul generating unit 402 is provided to the server 400. However, the present invention is not limited to this, and the playback UI generating unit 402 may be provided to the receiver 600.

(3) When providing the content state management unit 401 to the receiver 600, the receiver 600 may be configured to analyze the content in advance, and to create a content state management table 500 such that description of video types at all points of the content from which resume playback can be performed is included. The content state management table 500 in such a case includes multiple pairs of a *suspension point 503* and a *suspension point video type 504* for each *playback control file URL 502.* Further, the distribution server 400 may create such a content state management table 500 and may transmit the content state management table 500 via a network prior to the playback of content.

(4) When providing the content state management unit 401 to the distribution server 400, the distribution server 400 may be configured to analyze the content in advance, and to create a content state management table 500 such that description of video types at all points of the content from which resume playback can be performed is included. The content state management table 500 in such a case includes multiple pairs of a *suspension point 503* and a *suspension point video type 504* for each *playback control file URL 502.*

(5) In the second embodiment, information of video type is obtained from the video processing unit 121 of the receiver 600, and information of a suspension point and a video type at the suspension point is transmitted to the server 400 by the command generating unit 601 of the receiver 600. However, the present invention is not limited to this, and information of a suspension point and a video type at the suspension point may be obtained from the distribution controlling unit 302 of the distribution server 400.

In such a case, the distribution server 400 sets, as the suspension point, a relative time, from the head portion, of a point up to which distribution of the content has been performed when the playback suspension request is received from the receiver 600. Alternatively, the suspension point may be set to a time point preceding in time by a predetermined interval (for instance, two seconds) from the relative time, from the head portion, of a point up to which distribution of the content has been performed when the playback suspension request is received from the receiver 600. Further, in such a case, the distribution server 400 determines whether the frame at the specified suspension point is a 2D video frame or a 3D video frame, and sets the result of the determination as the information of video type.

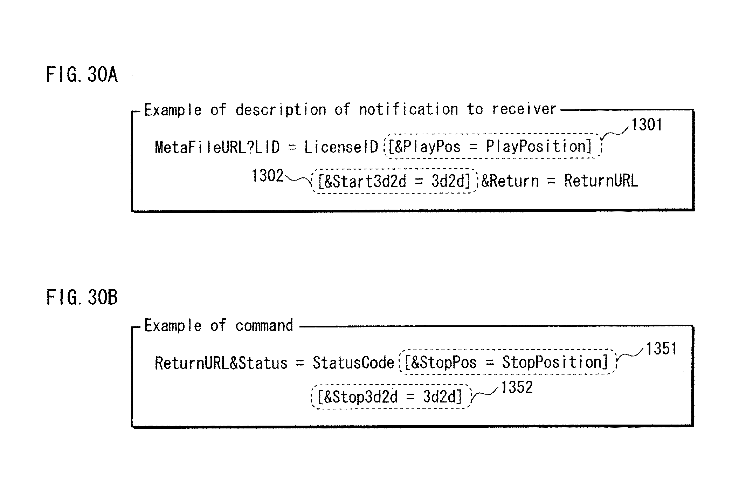

(6) In the second embodiment, the description of the playback UI and the description of the command are provided solely for the purpose of examples. The playback Ul and the command may include description as illustrated in Fig. 30A and 30B.

### (6-1) Fig. 30A

Fig. 30A illustrates an example of a description of the playback UI. In the example, notification is made of information for performing playback from the suspension point.

In the description of the playback UI illustrated in Fig. 30A, description 1301 indicates a suspension point, or in other words, a resume playback point. For instance, when the suspension point is set to 10.1 seconds (relative time from head portion of the content), the description 1301 indicates "*&PlayPos=10.1*".

In addition, description 1302 indicates whether the video at the suspension point is 3D video or 2D video. When the video at the suspension point is 3D video, the description 1302 indicates *"&Start3d2d=3d',* whereas when the video at the suspension point is 2D video, the description 1302 indicates "*&Start3d2d=2d*".

Further, in the example illustrated in Fig. 30A, "*MetaFileURL*" is a URL of a playback control file corresponding to the content subject to resume playback. In addition, "*LicenseID*" indicates a license ID of a specified content when performing playback of encrypted content. Finally, "*Return=ReturnURL*" indicates a URL of an image to be displayed when the playback of the content is completed.

### (6-2) Fig. 30B

Fig. 30B illustrates an example of a description of a command. In the example, notification is made to the distribution server 400 when playback of content has been suspended.

In the description of the command illustrated in Fig. 30B, description 1351 indicates a point at which playback has been suspended, and for instance, when the suspension point is set to 10.1 seconds (relative time from head portion of the content), the description 1351 indicates "*&StopPas=10.1*".

In addition, description 1352 indicates whether the video at the suspension point is 3D video or 2D video. When the video at the suspension point is 3D video, the description 1352 indicates "*&Stop3d2d=3d*", whereas when the video at the suspension point is 2D video, the description 1352 indicates "*&Stop3d2d=2d*".

Note that, as already described in the above, *ReturnURL* indicates a URL of an image to be displayed when the playback of the content is completed. In addition, the description of "*&Status=StatusCode*" indicates a termination state, and when playback of content is terminated properly, "*&Status=StatusCode*" indicates "*&Status=0*", whereas when playback of content is terminated improperly, a value equal to or smaller than "-*2*" is set to "*&Status=StatusCode*". For instance, an indication of "*&Status=-2*" is made in the case of erroneous termination.

Further, the description of the command transmitted to the distribution server 400 for notification in a case where the suspension point is 10.1 seconds and the video type at the suspension point is 3D is "*ReturnURL&Status=0[&StopPos=10.1][&Stop3d2d=3d]*".

(7) In the second embodiment, the example of the display illustrated in Fig. 23 is merely one example, and the present invention is not limited to this. Alternatively, the display screen may be a screen customized by the user. For instance, the point of the content up to which viewing has been performed may be displayed.

(8) The method described in the second embodiment may be realized by storing a program including description of the procedures of the method to a memory and causing a CPU (Central Processing Unit) or the like to read out the program from the memory and execute the program.

Alternatively, a program including description of the procedures of the above-described method may be stored on a recording medium and may be distributed.

(9) The structures (functional blocks) pertaining to the second embodiment may be implemented as an LSI (Large Scale Integration), which is an integrated circuit. That is, each of the structures may be separately integrated into a single chip, or the structures may be integrated into a single chip including a part or all of the structures. Although description has been made on the basis of an LSI in the above, the name of the integrated circuit may differ according to the degree of integration of the chips. Other integrated circuits include an IC (Integrated Circuit), a system LSI, a super LSI, and an ultra LSI. Further, the method applied for forming integrated circuits is not limited to the LSI, and the present invention may be realized on a dedicated circuit or a general purpose processor. For example, the present invention may be realized on an FPGA (Field Programmable Gate Array) being an LSI which can be programmed after manufacturing, or a reconfigurable processor being a LSI, reconfiguration of which could be made to the connection of internal circuit cells and settings. In addition, the computation performed by such structures may be performed by, for instance, a DSP (Digital Signal Processor), a CPU (Central Processing Unit) and or the like. Further, such processing steps may be recorded on a recording medium as a program, and may be realized by executing such a program.

Further in addition, if a new technology of circuit integration replacing that of the LSI emerges as a result of the progress made in the field of semiconductor technology or another technology deriving therefrom, the integration of function blocks may be performed applying such technology. At this point, there is a possibility of biotechnology being applied to induce the future development of circuit integration technology.

(10) Furthermore, combinations of the above-described embodiment and the modifications are construed as being included in the scope of the present invention.

### 3. Supplement

(1) One aspect of the present invention is a content distribution system including a distribution server that distributes a video stream pertaining to video content and a playback apparatus that decodes and plays back the video stream, the distribution server and the playback apparatus being connected via a network, the distribution server comprising: a distribution unit that distributes, to the playback apparatus via the network, a video stream containing video content corresponding to an entirety of a single program and an initial frame state flag associated with the video stream, the initial frame state flag indicating whether an initial frame of the video stream is a 3D video frame or a 2D video frame, the initial frame corresponding to a head portion of the video content, and the playback apparatus comprising: a reception unit that receives, from the distribution server, the video stream and the initial frame state flag; a determination unit that determines, prior to decoding of the video stream, whether the initial frame of the video stream is a 3D video frame or a 2D video frame by using the initial frame state flag; and a playback unit that sets, prior to decoding the video stream, an output mode to be applied to the initial frame to either a 3D output mode or a 2D output mode, and decodes and plays back the video stream, the output mode being set to the 3D output mode when the determination unit determines that the initial frame is a 3D video frame and the output mode being set to the 2D output mode when the determination unit determines that the initial frame is a 2D video frame.

According to this structure, the distribution server of the content distribution system transmits the initial frame state flag to the playback apparatus. The playback apparatus determines whether an initial frame of content corresponding to a single program is a 3D video frame or a 2D video frame by using the initial frame state flag. When determining that the initial frame is a 3D video frame, the playback apparatus sets the output mode to be applied to the initial frame to the 3D output mode prior to decoding the video stream. On the other hand, when determining that the initial frame is a 2D video frame, the playback apparatus sets the output mode to the 2D output mode prior to decoding the stream. The playback apparatus performs decoding and playback of the stream after setting an appropriate output mode, and therefore, playback of the stream is executed without missing out the initial frame of the stream.

(2) One aspect of the present invention is a playback apparatus that receives a video stream pertaining to video content from a distribution server connected thereto via a network and decodes and plays back the video stream, the playback apparatus comprising: a reception unit that receives, from the distribution server via the network, a video stream containing video content corresponding to an entirety of a single program and an initial frame state flag associated with the video stream, the initial frame state flag indicating whether an initial frame of the video stream is a 3D video frame or a 2D video frame, the initial frame corresponding to a head portion of the video content; a determination unit that determines, prior to decoding of the video stream, whether the initial frame of the video stream is a 3D video frame or a 2D video frame by using the initial frame state flag; and a playback unit that sets, prior to decoding the video stream, an output mode to be applied to the initial frame to either a 3D output mode or a 2D output mode, and decodes and plays back the video stream, the output mode being set to the 3D output mode when the determination unit determines that the initial frame is a 3D video frame and the output mode being set to the 2D output mode when the determination unit determines that the initial frame is a 2D video frame.

According to this structure, the playback apparatus determines whether an initial frame of content corresponding to a single program is a 2D video frame or a 2D video frame by using the initial frame status flag. When determining that the initial frame is a 3D video frame, the playback apparatus sets the output mode to be applied to the initial frame to the 3D output mode prior to decoding the video stream. On the other hand, when determining that the initial frame is a 2D video frame, the playback apparatus sets the output mode to the 2D output mode prior to decoding the stream. The playback apparatus performs decoding and playback of the stream after setting an appropriate output mode, and therefore, playback of the stream is executed without missing out the initial frame of the stream.

(3) In the playback apparatus, the video stream may be constituted of a plurality of partial streams, each partial stream being associated with a chapter state flag indicating whether an initial frame of a partial stream is a 3D video frame or a 2D video frame, the playback apparatus may further comprise: an instruction reception unit that receives, from a user, a move instruction for moving to an initial frame of a partial stream, wherein when the move instruction is received by the instruction reception unit, the determination unit may determine, prior to decoding of the partial stream, whether the initial frame of the partial stream is a 3D video frame or a 2D video frame by using the chapter state flag, and the playback unit may set, prior to decoding the partial stream, an output mode to be applied to the initial frame of the partial stream to either the 3D output mode or the 2D output mode, and decode and play back the partial stream, the output mode being set to the 3D output mode when the determination unit determines that the initial frame of the partial stream is a 3D video frame and the output mode being set to the 2D output mode when the determination unit determines that the initial frame of the partial stream is a 2D video frame.

According to this structure, the playback apparatus determines whether an initial frame of a partial stream, transition to which has been instructed by the user, is a 3D video frame or a 2D video frame by using the chapter state flag. When determining that the initial frame is a 3D video frame, the playback apparatus sets the output mode to be applied to the initial frame to the 3D output mode prior to decoding the partial stream. On the other hand, when determining that the initial frame is a 2D video frame, the playback apparatus sets the output mode to the 2D output mode prior to decoding the partial stream. The playback apparatus performs decoding and playback of the partial stream after setting an appropriate output mode, and therefore, playback of the partial stream is executed without missing out the initial frame of the stream.

(4) In addition, one aspect of the present invention is a distribution server that distributes a video stream pertaining to video content to a playback apparatus connected thereto via a network, the playback apparatus decoding and playing back the video stream, the distribution server comprising: a distribution unit that distributes, to the playback apparatus via the network, a video stream containing video content corresponding to an entirety of a single program and an initial frame state flag associated with the video stream, the initial frame state flag indicating whether an initial frame of the video stream is a 3D video frame or a 2D video frame, the initial frame corresponding to a head portion of the video content.

According to this structure, the distribution server of the content distribution system transmits the initial frame state flag to the playback apparatus. The initial frame state flag is associated with the video stream containing video content corresponding to a single program, and indicates whether an initial frame of the video stream is a 3D video frame or a 2D video frame. Hence, the playback apparatus is able to determine, prior to decoding the stream, whether the initial frame of the video stream is a 3D video frame or a 2D video frame by using the initial frame state flag. Further, when determining that the initial frame is a 3D video frame, the playback apparatus sets the output mode to be applied to the initial frame to the 3D output mode prior to decoding the video stream. On the other hand, when determining that the initial frame is a 2D video frame, the playback apparatus sets the output mode to the 2D output mode prior to decoding the stream. The playback apparatus performs decoding and playback of the stream after setting an appropriate output mode, and therefore, playback of the stream is executed without missing out the initial frame of the stream.

(5) One aspect of the present invention is a content distribution system including a distribution server that distributes a video stream pertaining to video content composed of a plurality of chapters and a playback apparatus that decodes and plays back the video stream, the distribution server and the playback apparatus being connected via a network, the distribution server comprising: a distribution unit that distributes, to the playback apparatus via the network, a video stream containing a chapter specified by a user among the chapters composing the video content and an initial frame state flag associated with the video stream, the initial frame state flag indicating whether an initial frame of the video stream is a 3D video frame or a 2D video frame, the initial frame corresponding to a head portion of the chapter, and the playback apparatus comprising: a reception unit that receives, from the distribution server, the video stream and the initial frame state flag; a determination unit that determines, prior to decoding of the video stream, whether the initial frame of the video stream is a 3D video frame or a 2D video frame by using the initial frame state flag; and a playback unit that sets, prior to decoding the video stream, an output mode to be applied to the initial frame to either a 3D output mode or a 2D output mode, and decodes and plays back the video stream, the output mode being set to the 3D output mode when the determination unit determines that the initial frame is a 3D video frame and the output mode being set to the 2D output mode when the determination unit determines that the initial frame is a 2D video frame.

According to this structure, the distribution server of the content distribution system transmits an initial frame state flag to the playback apparatus. The playback apparatus determines whether an initial frame of a video stream containing a chapter specified by the user is a 3D video frame or a 2D video frame by using the initial frame state flag. The playback apparatus, when determining that the initial frame is a 3D video frame, the playback apparatus sets the output mode to be applied to the initial frame to the 3D output mode prior to decoding the video stream. On the other hand, when determining that the initial frame is a 2D video frame, the playback apparatus sets the output mode to the 2D output mode prior to decoding the stream. The playback apparatus performs decoding and playback of the stream after setting an appropriate output mode, and therefore, playback of the chapter is executed without missing out the initial frame of the chapter.

(6) In addition, one aspect of the present invention is a playback apparatus that receives a video stream pertaining to video content composed of a plurality of chapters from a distribution server connected thereto via a network and decodes and plays back the video stream, the playback apparatus comprising: a reception unit that receives, from the distribution server via the network, a video stream containing a chapter specified by a user among the chapters composing the video content and an initial frame state flag associated with the video stream, the initial frame state flag indicating whether an initial frame of the video stream is a 3D video frame or a 2D video frame, the initial frame corresponding to a head portion of the chapter; a determination unit that determines, prior to decoding of the video stream, whether the initial frame of the video stream is a 3D video frame or a 2D video frame by using the initial frame state flag; and a playback unit that sets, prior to decoding the video stream, an output mode to be applied to the initial frame to either a 3D output mode or a 2D output mode and decodes and plays back the video stream, the output mode being set to the 3D output mode when the determination unit determines that the initial frame is a 3D video frame and the output mode being set to the 2D output mode when the determination unit determines that the initial frame is a 2D video frame.

According to this structure, the playback apparatus determines whether an initial frame of a video stream containing a chapter specified by the user is a 3D video frame or a 2D video frame by using the initial frame state flag. The playback apparatus, when determining that the initial frame is a 3D video frame, the playback apparatus sets the output mode to be applied to the initial frame to the 3D output mode prior to decoding the video stream. On the other hand, when determining that the initial frame is a 2D video frame, the playback apparatus sets the output mode to the 2D output mode prior to decoding the stream. The playback apparatus performs decoding and playback of the stream after setting an appropriate output mode, and therefore, playback of the chapter specified by the user is executed without missing out the initial frame of the chapter.

(7) In addition, one aspect of the present invention is a distribution server that distributes a video stream pertaining to video content composed of a plurality of chapters to a playback apparatus connected thereto via a network, the playback apparatus decoding and playing back the video stream, the distribution server comprising: a distribution unit distributing, to the playback apparatus via the network, a video stream containing a chapter specified by a user among the chapters composing the video content and an initial frame state flag associated with the video stream, the initial frame state flag indicating whether an initial frame of the video stream is a 3D video frame or a 2D video frame, the initial frame corresponding to a head portion of the chapter.

According to this structure, the distribution server transmits the initial frame state flag to the playback apparatus. The initial frame state flag is associated with the video stream containing a chapter specified by the user, and indicates whether an initial frame of the chapter is a 3D video frame or a 2D video frame. Hence, the playback apparatus is able to determine, prior to decoding the stream, whether the initial frame of the video stream is a 3D video frame or a 2D video frame by using the initial frame state flag. Further, when determining that the initial frame is a 3D video frame, the playback apparatus sets the output mode to be applied to the initial frame to the 3D output mode prior to decoding the video stream. On the other hand, when determining that the initial frame is a 2D video frame, the playback apparatus sets the output mode to the 2D output mode prior to decoding the stream. The playback apparatus performs decoding and playback of the stream after setting an appropriate output mode, and therefore, playback of the chapter specified by the user is executed without missing out the initial frame of the chapter.

(8) One aspect of the present invention is a content distribution system including a distribution server that distributes a video stream pertaining to video content and a playback apparatus that decodes and plays back the video stream, the distribution server and the playback apparatus being connected via a network, the distribution server comprising: a distribution unit that distributes, when a request is made by a user to resume playback of video content from a point of the video content where playback has been previously suspended by the user, a video stream containing a part of the video content following the point and an initial frame state flag associated with the video stream to the playback apparatus via the network, the initial frame state flag indicating whether an initial frame of the video stream is a 3D video frame or a 2D video frame, the initial frame corresponding to a head portion of the part of the video content, and the playback apparatus comprising: a reception unit that receives, from the distribution server, the video stream and the initial frame state flag; a determination unit that determines, prior to decoding of the video stream, whether the initial frame of the video stream is a 3D video frame or a 2D video frame by using the initial frame state flag; and a playback unit that sets, prior to decoding the video stream, an output mode to be applied to the initial frame to either a 3D output mode or a 2D output mode, and decodes and plays back the video stream, the output mode being set to the 3D output mode when the determination unit determines that the initial frame is a 3D video frame and the output mode being set to the 2D output mode when the determination unit determines that the initial frame is a 2D video frame.

According to this structure, the distribution server of the content distribution system transmits an initial frame state flag to the playback apparatus. The playback apparatus determines whether an initial frame of a video stream containing a part of the video content following the point where playback has been previously suspended is a 3D video frame or a 2D video frame by using the initial frame state flag. The playback apparatus, when determining that the initial frame is a 3D video frame, the playback apparatus sets the output mode to be applied to the initial frame to the 3D output mode prior to decoding the video stream. On the other hand, when determining that the initial frame is a 2D video frame, the playback apparatus sets the output mode to the 2D output mode prior to decoding the stream. The playback apparatus performs decoding and playback of the stream containing the part of the video content after setting an appropriate output mode, and therefore, resume playback of the part of the video content following the point where playback has been previously suspended is executed without missing out the initial frame of the part of the video content.

(9) In addition, one aspect of the present invention is a playback apparatus that receives a video stream pertaining to video content from a distribution server connected thereto via a network and decodes and plays back the video stream, the playback apparatus comprising: a reception unit that receives, when a request is made by a user to resume playback of video content from a point of the video content where playback has been previously suspended by the user, a video stream containing a part of the video content following the point and an initial frame state flag associated with the video stream from the distribution server via the network, the initial frame state flag indicating whether an initial frame of the video stream is a 3D video frame or a 2D video frame, the initial frame corresponding to a head portion of the part of the video content; a determination unit that determines, prior to decoding of the video stream, whether the initial frame of the video stream is a 3D video frame or a 2D video frame by using the initial frame state flag; and a playback unit that sets, prior to decoding the video stream, an output mode to be applied to the initial frame to either a 3D output mode or a 2D output mode, and decodes and plays back the video stream, the output mode being set to the 3D output mode when the determination unit determines that the initial frame is a 3D video frame and the output mode being set to the 2D output mode when the determination unit determines that the initial frame is a 2D video frame.

According to this structure, the playback apparatus determines whether an initial frame of a video stream containing a part of the video content following the point where playback has been previously suspended is a 3D video frame or a 2D video frame by using the initial frame state flag. The playback apparatus, when determining that the initial frame is a 3D video frame, the playback apparatus sets the output mode to be applied to the initial frame to the 3D output mode prior to decoding the video stream. On the other hand, when determining that the initial frame is a 2D video frame, the playback apparatus sets the output mode to the 2D output mode prior to decoding the stream. The playback apparatus performs decoding and playback of the stream containing the part of the video content after setting an appropriate output mode, and therefore, resume playback of the part of the video content following the point where playback has been previously suspended is executed without missing out the initial frame of the part of the content.

(10) Here, the playback apparatus may further comprise: a transmission unit that transmits, when an instruction is provided by the user to suspend playback of the video content, a frame state flag indicating whether a frame corresponding to a portion of the video content at a point of suspension is a 3D video frame or a 2D video frame to the distribution server via the network.

According to this structure, the playback apparatus transmits, when viewing of the video content is suspended, a suspension point frame status flag to the distribution server. Therefore, the distribution server is able to easily determine the video type of the content at the suspension point.

(11) In addition, one aspect of the present invention is a distribution server that distributes a video stream pertaining to video content to a playback apparatus connected thereto via a network, the playback apparatus decoding and playing back the video stream, the distribution server comprising: a distribution unit that distributes, when a request is made by a user to resume playback of video content from a point of the video content where playback has been previously suspended, a video stream containing a part of the video content following the point and an initial frame state flag associated with the video stream to the playback apparatus via the network, the initial frame state flag indicating whether an initial frame of the video stream is a 3D video frame or a 2D video frame, the initial frame corresponding to a head portion of the part of the video content.

According to this structure, the distribution server transmits the initial frame state flag to the playback apparatus. The initial frame state flag is associated with the video stream containing a part of the video content following the point where playback has been previously suspended, and indicates whether an initial frame of the part of the video content is a 3D video frame or a 2D video frame. Hence, the playback apparatus is able to determine, prior to decoding the stream, whether the initial frame of the video stream is a 3D video frame or a 2D video frame by using the initial frame state flag. Further, when determining that the initial frame is a 3D video frame, the playback apparatus sets the output mode to be applied to the initial frame to the 3D output mode prior to decoding the video stream. On the other hand, when determining that the initial frame is a 2D video frame, the playback apparatus sets the output mode to the 2D output mode prior to decoding the stream. The playback apparatus performs decoding and playback of the stream containing the part of the video content after setting an appropriate output mode, and therefore, resume playback of the part of the video content following the point where playback has been previously suspended is executed without missing out the initial frame of the part of the video content.

(12) Here, the distribution server may further comprise: a reception unit that receives, when a request is made by the user with respect to the playback apparatus to suspend playback of the video content, a suspension point state flag indicating whether a frame corresponding to a portion of the video content at a point of suspension is a 3D video frame or a 2D video frame from the playback apparatus via the network; and a storing unit storing the initial frame state flag and the suspension point state flag in association, wherein the distribution unit may transmit, when a request is made by the user with respect to the playback device to resume playback of the video content whose playback has been previously suspended, the suspension point state flag stored in the storing unit as the initial frame state flag to the playback apparatus via the network.

According to this structure, the distribution server receives, when viewing of the video content is suspended, a suspension point frame state flag from the playback apparatus and stores the suspension point frame state flag so received. Therefore, the distribution server is able to easily determine the video type of the content following the suspension point upon commencement of resume playback.

(13) Here, the distribution server may further comprise: a detection unit that detects whether the frame of the video stream corresponding to a portion of the video content at the point of suspension is a 3D video frame or a 2D video frame; and a storing unit that stores an initial frame state flag that is in accordance with a result of the detection by the detection unit, wherein the distribution unit may transmit, when a request is made by the user with respect to the playback device to resume playback of the video content whose playback has been previously suspended, the initial frame state flag stored in the storing unit to the playback apparatus via the network.

According to this structure, the distribution server detects, when viewing of the video content is suspended, whether the frame of the video content at the point of suspension is a 3D video frame or a 2D video frame and stores the result of the detection. Therefore, the distribution server is able to easily determine the video type of the content following the suspension point upon commencement of resume playback.

### [Industrial Applicability]

The above-described content distribution system is useful in the distribution and playback of content including either one of 3D or 2D video and content including both 3D and 2D video.

### [Reference Signs List]

| | |
|---|---|
| 1 | content distribution system |
| 2 | network |
| 100 | digital television |
| 101 | content output device |
| 102 | display device |
| 110 | TS buffer |
| 111 | encoded video buffer |
| 112 | decoded video buffer |
| 113 | input/output unit |
| 114 | demultiplexer |
| 115 | video decoder |
| 116 | audio decoder |
| 117 | playback controlling unit |
| 118 | output processing unit |
| 119 | user operation controlling unit |
| 120 | frame buffer |
| 121 | video processing unit |
| 122 | output controlling unit |
| 125 | program determining unit |
| 126 | initial frame determining unit |
| 130 | first buffer |
| 131 | second buffer |
| 132 | L image buffer |
| 133 | R image buffer |
| 140 | switch controlling unit |
| 141 | output unit |
| 142 | switch |
| 200 | 3D glasses |
| 300 | distribution server |
| 301 | content storing unit |
| 302 | distribution controlling unit |
| 303 | input/output unit |

## Claims

1. A content distribution system including a distribution server that distributes a video stream pertaining to video content and a playback apparatus that decodes and plays back the video stream, the distribution server and the playback apparatus being connected via a network, the distribution server comprising:
a distribution unit that distributes, to the playback apparatus via the network, a video stream containing video content corresponding to an entirety of a single program and an initial frame state flag associated with the video stream, the initial frame state flag indicating whether an initial frame of the video stream is a 3D video frame or a 2D video frame, the initial frame corresponding to a head portion of the video content, and
the playback apparatus comprising:
a reception unit that receives, from the distribution server, the video stream and the initial frame state flag;
a determination unit that determines, prior to decoding of the video stream, whether the initial frame of the video stream is a 3D video frame or a 2D video frame by using the initial frame state flag; and
a playback unit that sets, prior to decoding the video stream, an output mode to be applied to the initial frame to either a 3D output mode or a 2D output mode, and decodes and plays back the video stream, the output mode being set to the 3D output mode when the determination unit determines that the initial frame is a 3D video frame and the output mode being set to the 2D output mode when the determination unit determines that the initial frame is a 2D video frame.

2. A playback apparatus that receives a video stream pertaining to video content from a distribution server connected thereto via a network and decodes and plays back the video stream, the playback apparatus comprising:
a reception unit that receives, from the distribution server via the network, a video stream containing video content corresponding to an entirety of a single program and an initial frame state flag associated with the video stream, the initial frame state flag indicating whether an initial frame of the video stream is a 3D video frame or a 2D video frame, the initial frame corresponding to a head portion of the video content;
a determination unit that determines, prior to decoding of the video stream, whether the initial frame of the video stream is a 3D video frame or a 2D video frame by using the initial frame state flag; and
a playback unit that sets, prior to decoding the video stream, an output mode to be applied to the initial frame to either a 3D output mode or a 2D output mode, and decodes and plays back the video stream, the output mode being set to the 3D output mode when the determination unit determines that the initial frame is a 3D video frame and the output mode being set to the 2D output mode when the determination unit determines that the initial frame is a 2D video frame.

3. The playback apparatus of Claim 2, wherein the video stream is constituted of a plurality of partial streams, each partial stream being associated with a chapter state flag indicating whether an initial frame of a partial stream is a 3D video frame or a 2D video frame, the playback apparatus further comprising:
an instruction reception unit that receives, from a user, a move instruction for moving to an initial frame of a partial stream, wherein
when the move instruction is received by the instruction reception unit, the determination unit determines, prior to decoding of the partial stream, whether the initial frame of the partial stream is a 3D video frame or a 2D video frame by using the chapter state flag, and
the playback unit sets, prior to decoding the partial stream, an output mode to be applied to the initial frame of the partial stream to either the 3D output mode or the 2D output mode, and decodes and plays back the partial stream, the output mode being set to the 3D output mode when the determination unit determines that the initial frame of the partial stream is a 3D video frame and the output mode being set to the 2D output mode when the determination unit determines that the initial frame of the partial stream is a 2D video frame.

4. A distribution server that distributes a video stream pertaining to video content to a playback apparatus connected thereto via a network, the playback apparatus decoding and playing back the video stream, the distribution server comprising:
a distribution unit that distributes, to the playback apparatus via the network, a video stream containing video content corresponding to an entirety of a single program and an initial frame state flag associated with the video stream, the initial frame state flag indicating whether an initial frame of the video stream is a 3D video frame or a 2D video frame, the initial frame corresponding to a head portion of the video content.

5. A playback method used in a playback apparatus that receives a video stream pertaining to video content from a distribution server connected thereto via a network and decodes and plays back the video stream, the playback method comprising:
a reception step of receiving, from the distribution server via the network, a video stream containing video content corresponding to an entirety of a single program and an initial frame state flag associated with the video stream, the initial frame state flag indicating whether an initial frame of the video stream is a 3D video frame or a 2D video frame, the initial frame corresponding to a head portion of the video content;
a determination step of determining, prior to decoding of the video stream, whether the initial frame of the video stream is a 3D video frame or a 2D video frame by using the initial frame state flag; and
a playback step of setting, prior to decoding the video stream, an output mode to be applied to the initial frame to either a 3D output mode or a 2D output mode, and decoding and playing back the video stream, the output mode being set to the 3D output mode when determined in the determination step that the initial frame is a 3D video frame and the output mode being set to the 2D output mode when determined in the determination step that the initial frame is a 2D video frame.

6. A distribution method used in a distribution server that distributes a video stream pertaining to video content to a playback apparatus connected thereto via a network, the playback apparatus decoding and playing back the video stream, the distribution method comprising:
a distribution step of distributing, to the playback apparatus via the network, a video stream containing video content corresponding to an entirety of a single program and an initial frame state flag associated with the video stream, the initial frame state flag indicating whether an initial frame of the video stream is a 3D video frame or a 2D video frame, the initial frame corresponding to a head portion of the video content.

7. A content distribution system including a distribution server that distributes a video stream pertaining to video content composed of a plurality of chapters and a playback apparatus that decodes and plays back the video stream, the distribution server and the playback apparatus being connected via a network, the distribution server comprising:
a distribution unit that distributes, to the playback apparatus via the network, a video stream containing a chapter specified by a user among the chapters composing the video content and an initial frame state flag associated with the video stream, the initial frame state flag indicating whether an initial frame of the video stream is a 3D video frame or a 2D video frame, the initial frame corresponding to a head portion of the chapter, and
the playback apparatus comprising:
a reception unit that receives, from the distribution server, the video stream and the initial frame state flag;
a determination unit that determines, prior to decoding of the video stream, whether the initial frame of the video stream is a 3D video frame or a 2D video frame by using the initial frame state flag; and
a playback unit that sets, prior to decoding the video stream, an output mode to be applied to the initial frame to either a 3D output mode or a 2D output mode, and decodes and plays back the video stream, the output mode being set to the 3D output mode when the determination unit determines that the initial frame is a 3D video frame and the output mode being set to the 2D output mode when the determination unit determines that the initial frame is a 2D video frame.

8. A playback apparatus that receives a video stream pertaining to video content composed of a plurality of chapters from a distribution server connected thereto via a network and decodes and plays back the video stream, the playback apparatus comprising:
a reception unit that receives, from the distribution server via the network, a video stream containing a chapter specified by a user among the chapters composing the video content and an initial frame state flag associated with the video stream, the initial frame state flag indicating whether an initial frame of the video stream is a 3D video frame or a 2D video frame, the initial frame corresponding to a head portion of the chapter;
a determination unit that determines, prior to decoding of the video stream, whether the initial frame of the video stream is a 3D video frame or a 2D video frame by using the initial frame state flag; and
a playback unit that sets, prior to decoding the video stream, an output mode to be applied to the initial frame to either a 3D output mode or a 2D output mode and decodes and plays back the video stream, the output mode being set to the 3D output mode when the determination unit determines that the initial frame is a 3D video frame and the output mode being set to the 2D output mode when the determination unit determines that the initial frame is a 2D video frame.

9. A distribution server that distributes a video stream pertaining to video content composed of a plurality of chapters to a playback apparatus connected thereto via a network, the playback apparatus decoding and playing back the video stream, the distribution server comprising:
a distribution unit distributing, to the playback apparatus via the network, a video stream containing a chapter specified by a user among the chapters composing the video content and an initial frame state flag associated with the video stream, the initial frame state flag indicating whether an initial frame of the video stream is a 3D video frame or a 2D video frame, the initial frame corresponding to a head portion of the chapter.

10. A content distribution system including a distribution server that distributes a video stream pertaining to video content and a playback apparatus that decodes and plays back the video stream, the distribution server and the playback apparatus being connected via a network, the distribution server comprising:
a distribution unit that distributes, when a request is made by a user to resume playback of video content from a point of the video content where playback has been previously suspended by the user, a video stream containing a part of the video content following the point and an initial frame state flag associated with the video stream to the playback apparatus via the network, the initial frame state flag indicating whether an initial frame of the video stream is a 3D video frame or a 2D video frame, the initial frame corresponding to a head portion of the part of the video content, and
the playback apparatus comprising:
a reception unit that receives, from the distribution server, the video stream and the initial frame state flag;
a determination unit that determines, prior to decoding of the video stream, whether the initial frame of the video stream is a 3D video frame or a 2D video frame by using the initial frame state flag; and
a playback unit that sets, prior to decoding the video stream, an output mode to be applied to the initial frame to either a 3D output mode or a 2D output mode, and decodes and plays back the video stream, the output mode being set to the 3D output mode when the determination unit determines that the initial frame is a 3D video frame and the output mode being set to the 2D output mode when the determination unit determines that the initial frame is a 2D video frame.

11. A playback apparatus that receives a video stream pertaining to video content from a distribution server connected thereto via a network and decodes and plays back the video stream, the playback apparatus comprising:
a reception unit that receives, when a request is made by a user to resume playback of video content from a point of the video content where playback has been previously suspended by the user, a video stream containing a part of the video content following the point and an initial frame state flag associated with the video stream from the distribution server via the network, the initial frame state flag indicating whether an initial frame of the video stream is a 3D video frame or a 2D video frame, the initial frame corresponding to a head portion of the part of the video content;
a determination unit that determines, prior to decoding of the video stream, whether the initial frame of the video stream is a 3D video frame or a 2D video frame by using the initial frame state flag; and
a playback unit that sets, prior to decoding the video stream, an output mode to be applied to the initial frame to either a 3D output mode or a 2D output mode, and decodes and plays back the video stream, the output mode being set to the 3D output mode when the determination unit determines that the initial frame is a 3D video frame and the output mode being set to the 2D output mode when the determination unit determines that the initial frame is a 2D video frame.

12. The playback apparatus of Claim 11, further comprising:
a transmission unit that transmits, when an instruction is provided by the user to suspend playback of the video content, a frame state flag indicating whether a frame corresponding to a portion of the video content at a point of suspension is a 3D video frame or a 2D video frame to the distribution server via the network.

13. A distribution server that distributes a video stream pertaining to video content to a playback apparatus connected thereto via a network, the playback apparatus decoding and playing back the video stream, the distribution server comprising:
a distribution unit that distributes, when a request is made by a user to resume playback of video content from a point of the video content where playback has been previously suspended, a video stream containing a part of the video content following the point and an initial frame state flag associated with the video stream to the playback apparatus via the network, the initial frame state flag indicating whether an initial frame of the video stream is a 3D video frame or a 2D video frame, the initial frame corresponding to a head portion of the part of the video content.

14. The distribution server of Claim 13, further comprising:
a reception unit that receives, when a request is made by the user with respect to the playback apparatus to suspend playback of the video content, a suspension point state flag indicating whether a frame corresponding to a portion of the video content at a point of suspension is a 3D video frame or a 2D video frame from the playback apparatus via the network; and
a storing unit storing the initial frame state flag and the suspension point state flag in association, wherein
the distribution unit transmits, when a request is made by the user with respect to the playback device to resume playback of the video content whose playback has been previously suspended, the suspension point state flag stored in the storing unit as the initial frame state flag to the playback apparatus via the network.

15. The distribution server of Claim 13, further comprising:
a detection unit that detects whether the frame of the video stream corresponding to a portion of the video content at the point of suspension is a 3D video frame or a 2D video frame; and
a storing unit that stores an initial frame state flag that is in accordance with a result of the detection by the detection unit, wherein
the distribution unit transmits, when a request is made by the user with respect to the playback device to resume playback of the video content whose playback has been previously suspended, the initial frame state flag stored in the storing unit to the playback apparatus via the network.
